# EUROPEAN PATENT SPECIFICATION

(11) **EP 3 692 481 B1**
(45) Date of publication and mention of the grant of the patent: **15.02.2023**
(21) Application number: 19750649.6
(22) Date of filing: 10.01.2019
(51) Int. Cl.: G06Q 10/10

(54) **COMPUTERIZED NETWORK SYSTEM FOR INITIATING, FACILITATING, AUDITING, AND MANAGING COMMUNICATIONS AND DOCUMENTS INVOLVING PROFESSIONAL EXPERTISE**
COMPUTERGESTÜTZTES NETZWERKSYSTEM ZUM INITIIEREN, ERLEICHTERN, PRÜFEN UND VERWALTEN VON KOMMUNIKATIONEN UND DOKUMENTEN MIT FACHEXPERTISE
SYSTÈME DE RÉSEAU INFORMATISÉ POUR INITIER, FACILITER, AUDITER ET GÉRER DES COMMUNICATIONS ET DES DOCUMENTS IMPLIQUANT UNE EXPERTISE PROFESSIONNELLE

(30) Priority: 12.02.2018 US 201862629354 P; 20.02.2018 US 201862632718 P; 08.05.2018 US 201862668496 P; 20.07.2018 US 201816041070; 23.10.2018 WO PCT/US2018/057099
(43) Date of publication of application: 12.08.2020
(73) Proprietor: O'Brien, Beatrice, T., Short Hills, NJ 07078 (US)
(72) Inventor: O'Brien, Beatrice, T., Short Hills, NJ 07078 (US)
(74) Representative: Gillott-Jones, Nathan Philip
(86) International application number: PCT/US2019/013045
(87) International publication number: WO 2019/156773

(56) References cited:
- US-A1- 2006 259 307
- US-A1- 2013 013 362
- US-A1- 2015 019 527
- US-A1- 2015 154 646
- US-A1- 2015 332 283
- US-A1- 2017 041 296
- US-A1- 2017 193 619
- MAYBURY, Mark T.: "Expert finding systems", MITRE Technical Report, September 2006 (2006-09), XP055042897, Retrieved from the Internet: URL:https://www.mitre.org/sites/default/fi les/pdf/06_1115.pdf [retrieved on 2019-03-16]

## Description

### Field of Invention

The present invention relates generally to the fields of networked digital communications and documents and computerized systems for initiating, facilitating, auditing, and managing such communications and documents, and more particularly to applications of such systems to communications and documents involving one or more fields of professional expertise.

### Background of the Invention

When a lay person is seeking advice or explanations concerning a professional discipline, such as law or medicine, or regarding documents relating to that discipline, the time and expense involved in making an appointment with a qualified professional can be an inhibiting factor. Conversely, professionals are often reluctant to give informal advice because of potential liability issues involving the content of the communications, possible conflicts-of-interest and confidentiality.

While various websites offer information and/or respond to questions pertaining to professional expertise, the ability of the inquirer to interact in real time with a qualified professional is absent or very limited. Ethical constraints can also make it difficult for professionals to initiate direct communications with members of the public with whom they have had no previous relationship.

This state of affairs works to the disadvantage of both inquiring lay people and potentially helpful professionals. The former are deprived of information vital to their personal and financial affairs, and the latter lose the opportunity to interact with potential clients or patients.

US 2017/041296 discloses a collaboration system used in collaborative processes on shared documents by a plurality of users.

The present invention responds to this dilemma by providing an integrated computerized system using downloadable and web-based application software ("Apps") to initiate, manage and track exchanges of information and documents between lay users, including both individual and business enterprises, and qualified professionals, as well as between and among individual and enterprise users themselves. The features of the Apps, as described further herein, assure that all such interactions proceed in accordance with all applicable legal and ethical requirements for obtaining users' informed consent and protecting users' confidential information. Compliance with such requirements is documented by an audit trail compiled by the Apps and stored in a system database for the protection of both participating users and professionals, so that impediments to the flow of information and guidance on professional topics are minimized.

### Summary of the Invention

The system of the present invention comprises a computerized network which links individual lay users, hereinafter referred to as "standard users," with qualified professionals in one or more disciplines, such as law, medicine, engineering, accounting and architecture, who are hereinafter referred to as "participating professionals." Business entities, such as corporations, partnerships and limited liability companies, can also participate as "enterprise users," with linkage through the network to both standard users and participating professionals.

For standard users, the system provides a downloadable native User App, which runs on a smartphone, tablet or other personal computing device (hereinafter collectively referred to as a "pc device"). Enterprise users participate through a Web App, which runs on a web platform maintained by the System Server. Participating professionals are provided with a downloadable native Professional App, which runs on a pc device and links to the Web App.

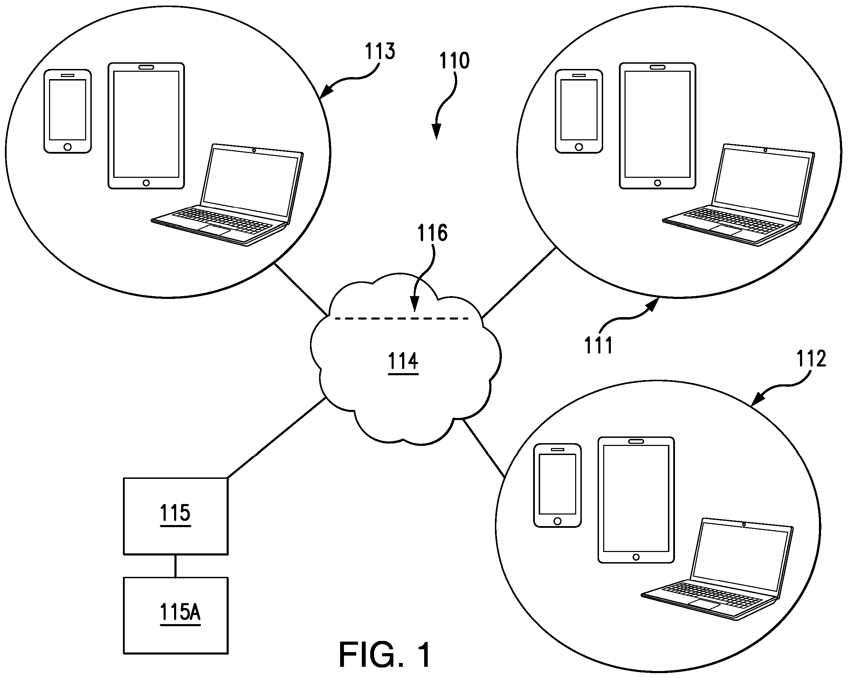

The hardware architecture of the system network **110** is depicted schematically in **Fig. 1****,** which shows the standard user pc devices **111,** enterprise pc devices **112,** professional pc devices **113,** the connecting internet **114,** the System Server **115,** and the System Database **115A.** As will be explained subsequently herein, the system network **110** also enables private communications path **116** between a standard user **111** and a professional **113** with whom the standard user **111** has established a client or patient relationship, so as to protect the confidentiality of client/patient information.

The User App provides a top menu comprising a User Login page, a Home Screen and a User's Tool Menu. The User's Tool Menu comprises option tabs for Connect, Profile, Files, Upload, Chat, and Professional Services. The Connect option enables standard users to engage with other standard users and enterprise users in discussion forums, categorized by topics and hashtags relating to the relevant professional discipline. Through the Profile tab, users manage their personal settings, as well as app notifications and alerts.

Under the Files tab, the user can view the status of documents, highlight terms within a document for definition, open a live chat with a professional from within the document, or agree to the document by voice (VoIP) recording or touch screen confirmation. In the Chat option, users can open a live chat consultation with a qualified professional by selecting a professional discipline and a specialty area within that discipline. The "in-App calling" feature allows the user and/or the professional to select a live chat mode of text, VOIP call or video chat. Documents and files relevant to the professional consultation can be uploaded via the Upload option, and the user can highlight sections of a document or file to which their inquiry pertains.

When the standard user shares files and/or documents with participating professionals, the User App advises them of their privacy rights and obtains their informed consent to the information disclosures. All shared user information and user-professional communications are recorded and preserved in an audit trail, the immutability of which can be protected using blockchain technology.

The User and Professional Apps restrict access to shared user information and user-professional communications to the respective user and professional and maintain an immutable audit trail of the confidential handling of such information and communications. In the event a user enters into a formal client or patient relationship with a participating professional, the Apps route subsequent communications and information disclosures on a private basis between the user and the professional.

The Professional App provides a top menu comprising a Professional Login Page, a Home Screen and a Professional's Tool Menu. The Professional's Tool Menu comprises option tabs for Web App link, Profile, Files, Chat, and Proposals. The initial Professional Login includes a setup of the Professional App, which elicits the professional's qualifications, specialty areas, experience, and permissions/licenses, as well as billing information and terms associated with their participation in one or more of the service plans provided by the system.

Under the Files option, the professional accesses a list of documents and files relating to standard users with whom he/she has interacted, sees the status of each document/file, displays the entire document/file, and receives prompts for actions required in connection therewith. From the Chat tab, the professional accesses an itemized list of chats they have open with standard users and enterprise users (through the Web App). A specific chat item can be selected to open a chat window with the respective user. The Professional App incorporates informed consent, confidentiality and audit trail features corresponding to those described above with reference to the User App.

Enterprise users access the system network through the Web App, which is also accessible to professionals. The Web App has a top menu comprising a Login Page and a Dashboard Main Menu. Initial setup of an enterprise account involves selection of a service plan and associated billing information. The Dashboard enables the enterprise user to upload documents, including legal agreements, which are intended for one or more standard users. The system offers plan services that include staff review of enterprise documents and identification of problems needing corrective action. Depending on the selected service plan, document review can include consultation with a staff lawyer regarding legal issues pertaining to the document.

The Web App also includes a Group Chat option, through which enterprise users can engage in group chats with multiple invited standard users, professionals and/or other enterprise users. The Group Chat option allows the participants to choose between chat modes of text, VOIP or video chat. Invited parties must sign a Non-Disclosure Agreement (NDA) uploaded by the initiating enterprise user prior to joining the group chat. Within the group chat, documents can be shared by the initiating enterprise user.

The present invention also provides a platform for the initiation of professional services agreements between participating professionals and standard and/or enterprise users. The User App and the Web App each have a Professional Services Menu, by which a standard or enterprise user can request that participating professionals submit proposals for specified professional services, through a Proposals Menu in the Professional App. Conversely, the Proposals Menu of the Professional App also enables the participating professionals to offer specified professional services at specified fixed fees to standard and/or enterprise users, who can accept the offers through the Professional Services Menu of the User or Web App.

The User App and the Web App also incorporate, under the Professional Services Menu, a Proposal Qualification/Evaluation option. In the Proposal Qualification/Evaluation option, a standard user or an enterprise user can specify minimum qualifications for participating professionals submitting proposals and/or multiple proposal evaluation criteria, by which the App can generate a "short list" of qualifying proposals and/or a ranking of proposals based on the evaluation criteria.

In many instances, the documents associated with professional services comprise forms, which are generated and periodically updated by governmental or private entities. The present invention incorporates software which automatically updates all such professional forms, either through subscription arrangements with the relevant issuing entities or by release-date downloads from the websites of the issuing entities. Similarly, professional services are impacted by changes in regulatory requirements and standards. Accordingly, the software system of the present invention automatically notifies affected participating professionals of such regulatory changes, which are obtained through subscription arrangements with the relevant regulatory and standards-setting entities or by notice-date downloads from the websites of such entities.

The present invention enables participating professionals and their clients to communicate, share information, and negotiate and/or create documents relating to the professionals' expertise and services. It enables auto-completion of forms across multiple professional practices and seamless referrals between different professional practices through a process which integrates and audits compliance with applicable requirements of informed consent and confidentiality. It opens a communication channel, including live chat, between the professionals and their clients and generates an immutable audit trail of ensuing transactions and interactions. The system also provides for the simplification and clarifications of terminology via these communications by providing simple definitions for particular terms with which an end user is not familiar.

The foregoing summarizes the general design features of the present invention. In the following sections, specific embodiments of the present invention will be described in some detail. These specific embodiments are intended to demonstrate the feasibility of implementing the present invention in accordance with the general design features discussed above. Therefore, the detailed descriptions of these embodiments are offered for illustrative and exemplary purposes only, and they are not intended to limit the scope of the foregoing summary description.

### Brief Description of the Drawings

**Fig. 1** is a schematic diagram of the hardware and network architecture of the present invention;
**Fig. 2** is an exemplary flow chart of one embodiment of the User App of the present invention;
**Fig. 3** is an exemplary flow chart of one embodiment of the Professional App of the present invention;
**Fig. 4** is an exemplary flow chart of one embodiment of the Web App of the present invention;
**Figs. 5A & 5B** are exemplary wireframes for the "Connect Threads" screens of one embodiment of the User App of the present invention;
**Figs. 6A-6D** are exemplary wire frames for the "My Cases" screens of one embodiment of the User App of the present invention;
**Figs. 7A & 7B** are exemplary wireframes for "Live Chat" screens of one embodiment of the User App of the present invention;
**Fig. 8** is an exemplary wireframe for a lawyer's professional home screen in one embodiment of the Professional App of the present invention;
**Figs. 9A-9C** are exemplary wireframes for enterprise "Document" screens in one embodiment of the Web App of the present invention;
**Fig. 10** is an exemplary wireframe for an enterprise "Group Chat" screen in one embodiment of the Web App of the present invention;
**Fig. 11** is an exemplary flowchart of wireframes for enterprise-to-enterprise referral screens in one embodiment of the Web App of the present invention;
**Fig. 12** is an exemplary detail of the User App flowchart of **Fig. 2****,** showing the "Professional Services" submenu;
**Fig. 13** is an exemplary detail of the Professional App flowchart of **Fig. 3****,** showing the "Proposals" submenu.
**Fig. 14** is an exemplary detail of the Web App flowchart of **Fig. 4****,** showing the "Studies" submenu;
**Figs. 15A-15C** are exemplary wireframes for the "Study Management" screens of one embodiment of the Web App of the present invention;
**Figs. 16A-16C** are exemplary wireframes for the authentication of study participants and professionals according to one embodiment of the Web App of the present invention;
**Figs. 17A-17B** depict an exemplary information architecture for an exemplary Studies Menu tailored for clinical trials of new pharmaceutical products;
**Figs. 18A-18C** depict exemplary wireframes corresponding to the Q&A component of the exemplary Studies Menu tailored for clinical trials of new pharmaceutical products;
**Figs. 19A-19C** depict exemplary wireframes corresponding to the Messaging component of the exemplary Studies Menu tailored for clinical trials of new pharmaceutical products;
**Figs. 20A-20E** depict exemplary wireframes corresponding to the Documents component of the exemplary Studies Menu tailored for clinical trials of new pharmaceutical products;
**Figs. 21A-21B** depict exemplary wireframes corresponding to the Settings component of the exemplary Studies Menu tailored for clinical trials of new pharmaceutical products; and
**Figs. 22A-22E** depict exemplary wireframes corresponding to the Study Management component of the exemplary Studies Menu tailored for clinical trials of new pharmaceutical products.

### Detailed Description of the Preferred Embodiment

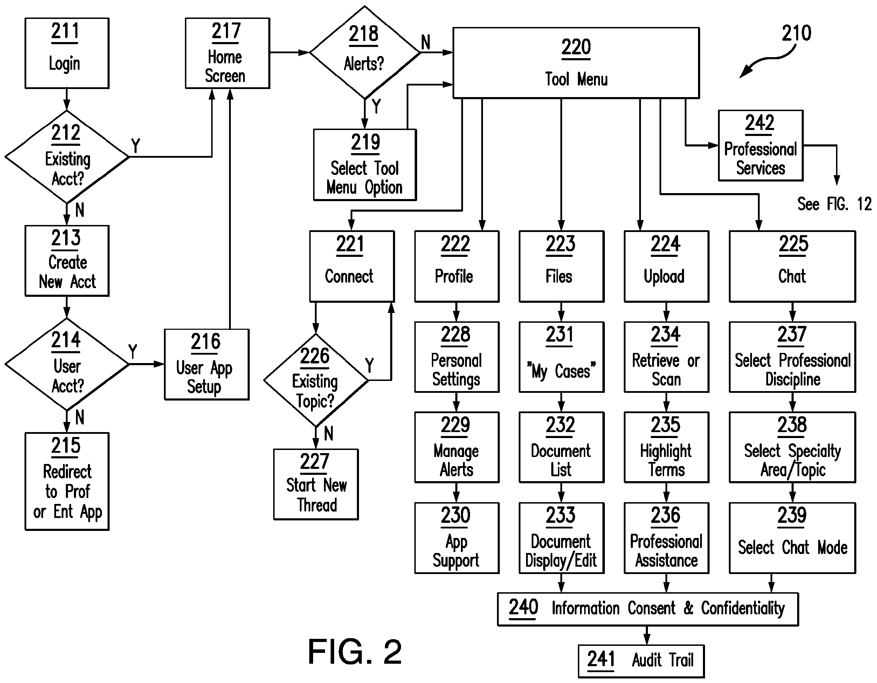

Referring to **Fig. 2****,** an exemplary flow chart for one embodiment of the User App **210** is depicted. In the Login screen **211,** the standard user logs in with a username and password, if the user has an existing account **212.** If not, the user creates a new account **213 214,** he/she is guided through setup **216** of the User App **210.** Professionals and enterprise users are redirected **215** to the Professional App **310** and the Web App **410,** respectively.

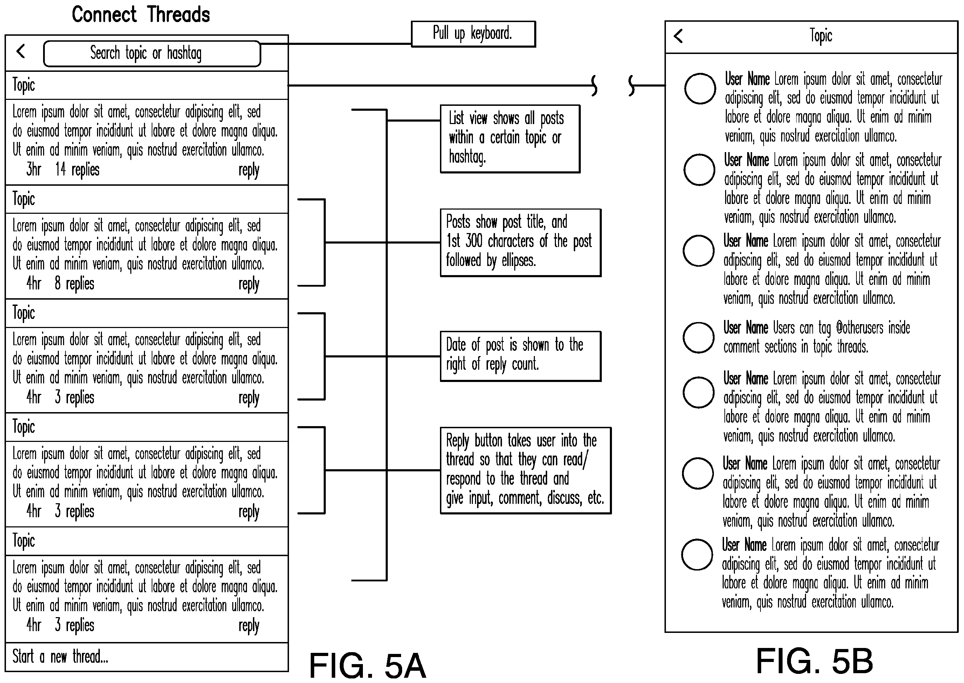

Upon login **211** to an established account **212 216,** the User App **210** opens the Home Screen **217,** which defaults to a display of any "Connect" **221** chats that the user has opened or participated in. If the user has any alerts requiring action **218,** he/she will select the appropriate option **219** from the User's Tool Menu **220** to deal with it. If not, clicking on the "Connect" button **221** directs the user to an itemized list of topics **226** being discussed by other standard or enterprise users. Users can search by topic or hashtag for existing topic discussions via a search bar at the top of the page. Exemplary wireframes for these "Connect Threads" screens are depicted in **Figs. 5A** and **5B****.** Users can start a new thread **227** by tapping the "Start a new thread" at the bottom of the screen.

Through the Profile tab **222,** users manage their personal settings **228** and alerts **229.** Here they can toggle alerts from "Connect" **221,** "My Cases" **231** and "Chat" **225** on and off. And here they can also access User App Support **230,** to report problems or upgrade/downgrade their account.

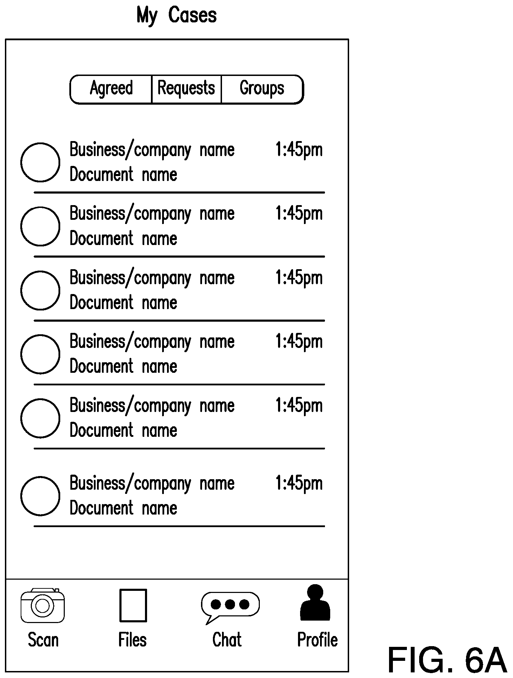

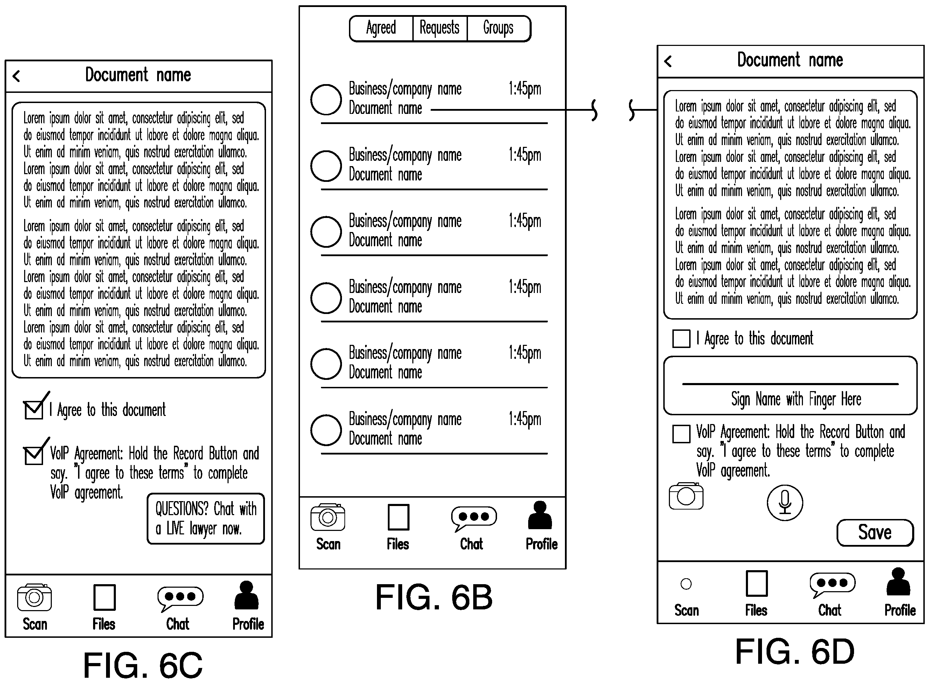

Under the Files option **223,** users can look up "My Cases" **231** to view legal documents they have signed or need to sign, as well as private group chats to which they have been invited by an enterprise user. Legal documents are displayed in an itemized list **232** identifying the issuing business name and the date when the document was sent to the user. Upon clicking on any document on the list **232,** the user displays the full document **233** and can highlight terms within the document for definition or open a live chat with a professional, such as a lawyer. If the document requires his/her signature, the user can agree to the document by VoIP recording, touch screen signature, or one touch confirmation. Exemplary wireframes for these "My Cases" screens are depicted in **Figs. 6A-6D****.**

Using the Upload option **224,** users can upload scanned or saved files and documents **234.** The User App provides OCR to convert scanned images into readable text. When a user highlights terms in a document **235,** the App pulls definitions from search engines, websites and/or databases and displays them. The definition display allows the user to elect a "depth" of definition of the subject terminology, ranging from a brief dictionary-type definition to an expanded analysis of the terminology with examples of its usage. Optionally, the definition display can include an audible narration component explaining the terminology and/or an animation figure or character giving an audible explanation of the terminology. Users can also highlight sections of a document to refer to while requesting the assistance of a professional **236,** such as a lawyer, through the App's Chat feature **225.**

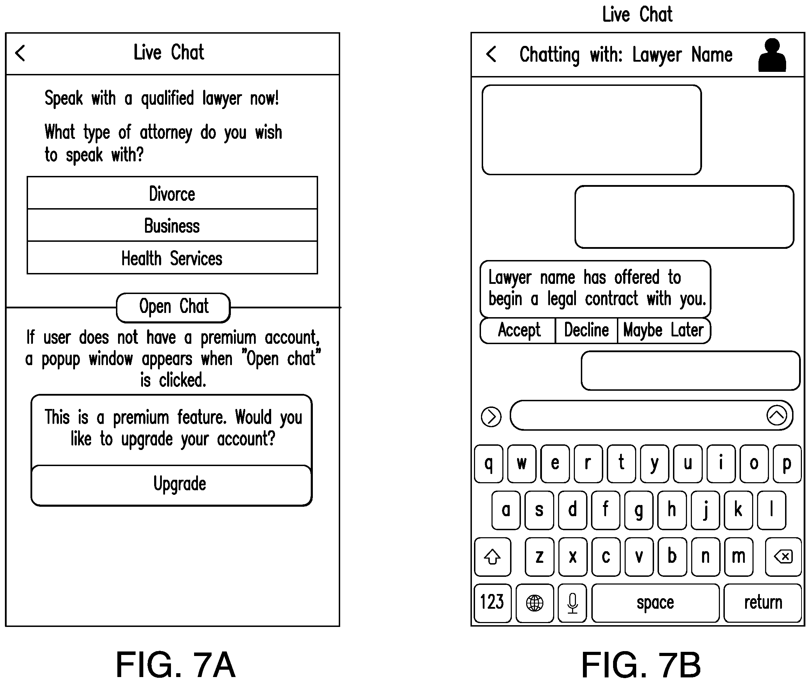

Through the Chat feature **225** of the User App **210,** users can open a live chat with a qualified professional. The user selects a professional discipline **237,** such as law, and then selects a specialty area or topic **238** from a list of categories. The user and/or professional can select a chat mode **239** of text, VoIP call or video chat. Exemplary wireframes for "Live Chat" screens specific to a lawyer are depicted in **Figs. 7A** and **7B****.** With respect to shared user information and communications in the Files **223,** Upload **224** and Chat **225** operations, the User App **210** informs the user of his/her privacy rights and records the user's informed consent **240** in an immutable audit trail **241.**

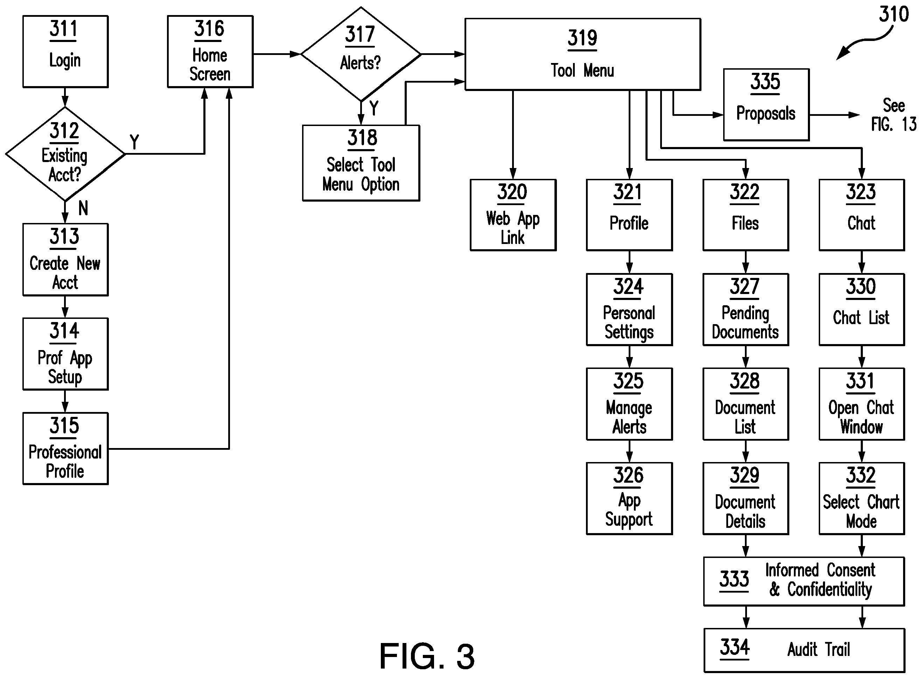

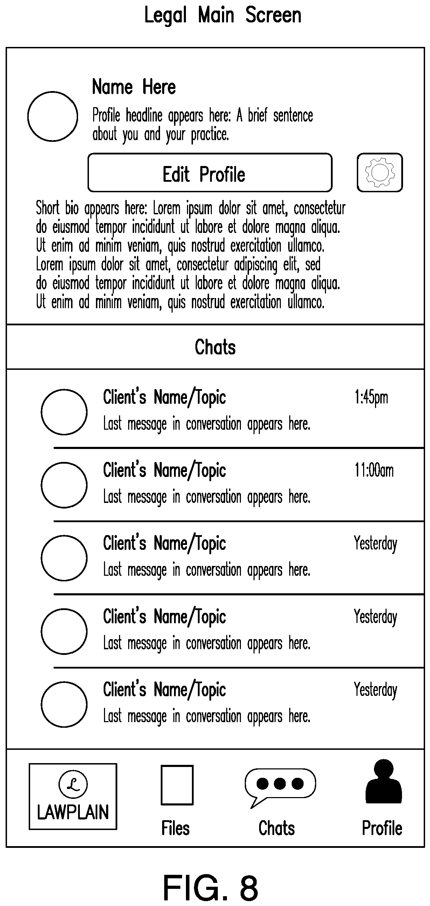

Referring to **Fig. 3****,** an exemplary flow chart for one embodiment of the Professional App **310** is depicted. From the Login screen **311,** the professional with an existing account **312** logs in with a username and password. Otherwise, a new account is created **313,** and the professional is guided through App Setup **314,** in which profile **315** and billing information is supplied and terms of service agreed upon. In either case, after Login **311** the App **310** opens a Home Screen **316,** which initially displays an itemized list of the professional's chats, with the most recent appearing first. An exemplary wireframe for a lawyer's professional Home Screen is depicted in **Fig. 8****.**

At the bottom of the Home Screen appears the Professional's "Tool Menu" **319,** which includes links to the Web App **320,** Profile **321,** Files **322,** Chat **323,** and Proposals **335.** If the professional has any alerts requiring action **317,** he/she will select the appropriate option **318** from the Tool Menu **319.**

Through the Profile tab **321,** professionals manage their personal settings **324** and alerts **325.** Here they can toggle alerts from "Chat" on and off. These alerts comprise new events that arise in one of their chats, including new chat requests that fall within their area of professional expertise, new messages from existing clients/patients, and VoIP or video chat calling alerts involving existing clients/patients. And here they can also access Professional App Support **326,** to report problems or upgrade/downgrade their account.

Under the Files option **322,** professionals can upload legal documents **327,** such as attorney retainer agreements which they have extended to standard or enterprise users who want to contract for their services. They can display an itemized list of time-stamped documents **328,** indicating which have been agreed upon by clients/patients and which are still pending. Upon clicking upon a listed document, full documents details are displayed **329.** Professionals can toggle between "agreed" and "pending" to view users who have agreed or not to that document. They can also click on "pending" to send reminders to users who have not yet agreed to the document.

Through the "Chat" line **323** on the Home Screen **316,** the professional views an itemized list **330** of chats they have open with standard and enterprise users. The list **330** shows the user's name and chat topic, along with the first 25 characters of the last message and a time stamp of when the message was sent. Clicking on one of these chats allows the professional to open a chat window **331** with the user. The professional and/or the user can select a chat mode **332** of text, VoIP call or video chat. With respect to shared user information and communications in the File and Chat operations, the Professional App informs the user of his/her confidentiality rights and records the user's informed consent **333** in an immutable audit trail **334.**

The information exchanged and documented in the "Files" and "Chat" section of the App **310** are private and visible only to the following parties through the following channels:
1. **End User.** The end user's files are only visible to their respective account accessed via their User App username and password.
2. **Enterprise Account.** All legal documents signed by an end user can be viewed/stored by the enterprise account that extended the document for the end user to sign. This includes administrative accounts for that specific enterprise account.
3. **Professional.** When an end user reaches out for assistance from a professional, they consent to share their personal information and information contained in their respective documents with that professional.
4. **Group Chats.** Group chats are opened only by an enterprise account. Only other enterprise accounts, professionals and standard users invited by the initiating enterprise account can view and access these group chats. Invited parties must sign an NDA or equivalent uploaded by the initiating enterprise account prior to joining the group chat. Within this group chat, documents can be shared from the initiating enterprise account with the members within the group chat.

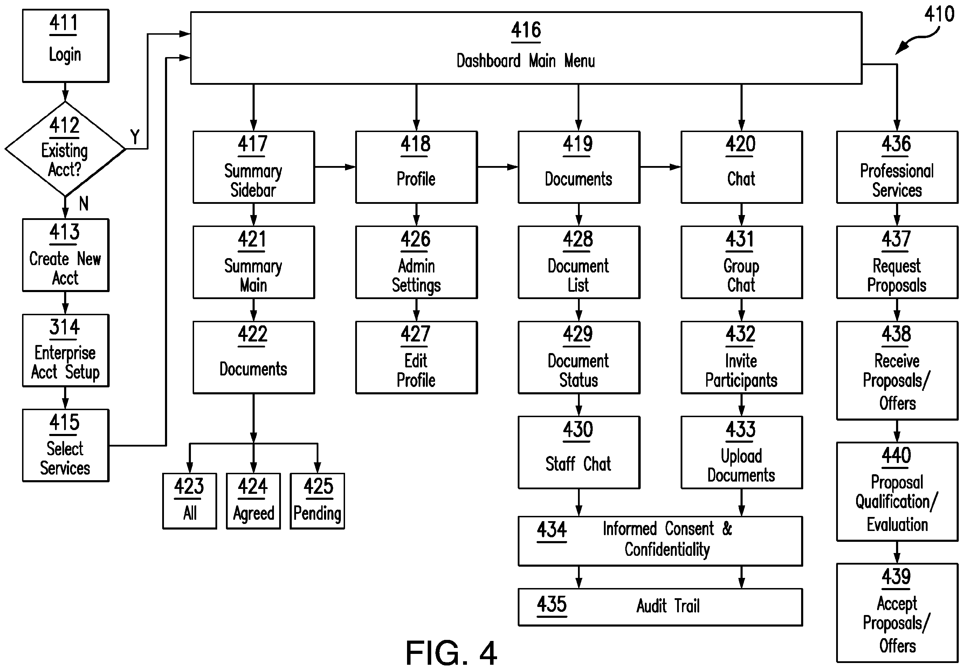

Referring to **Fig. 4****,** an exemplary flow chart for one embodiment of the Web App **410** is depicted. The Login **411** procedures for existing accounts **412** and new account creation **413** are followed, and an enterprise account is Setup **414,** with selection of services **415** and billing information.

After Login, the App opens to Dashboard Main Menu **416,** with links to the Summary Sidebar **417,** Profile **418,** Documents **419,** Chat **420,** and Professional Services **436.** The Summary Sidebar **417** provides alerts from plan staff regarding potential problems with an enterprise user's current legal documents. The Summary Main Dashboard **421** shows all documents **422** sent to standard users for signing, broken down into three categories: (1) "All" **423,** listed with newest first and showing document name, date sent, username of recipient, and whether the user has agreed to the document; (2) "Agreed" **424,** showing only signed documents, with the newest listed first; and (3) "Pending" **425,** showing only documents that have been sent to the end user but not signed.

Enterprise users can click on the username to display the document name, the full document, the user's digital signature, a saved VoIP agreement, or a verified one tap agreement. Each of these will display as red prompts if the client has not signed the document via that channel.

From the Profile submenu **418,** the enterprise account can manage its administrator settings **426** and edit its profile information **427.**

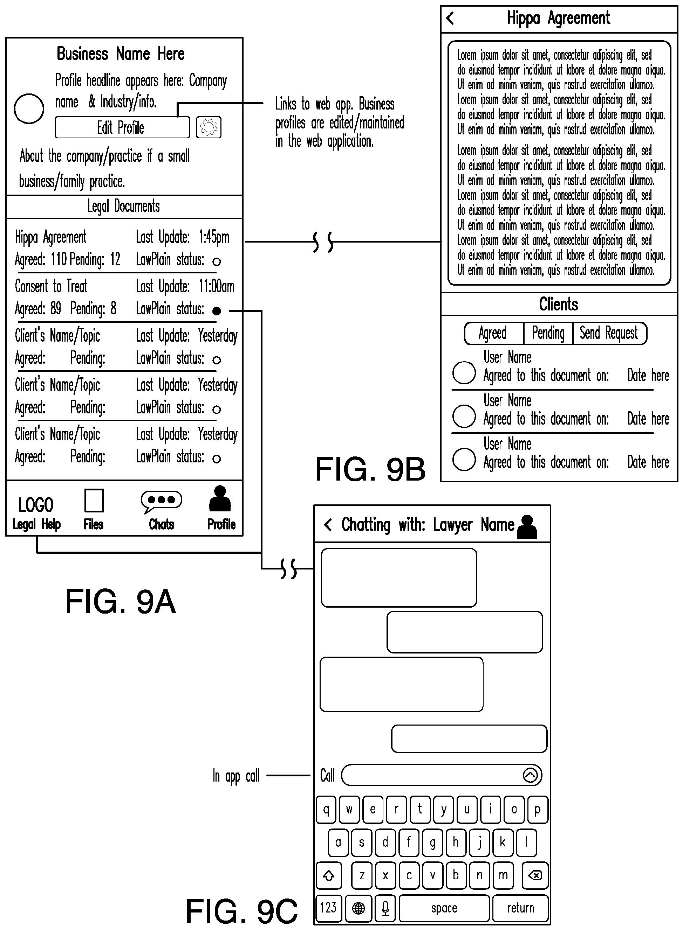

The Documents submenu **419** provides a list of all documents **428** uploaded by the enterprise user to be sent to standard users engaged by the enterprise. The document list displays the document name, upload date and plan status **429.** A green indicia indicates that plan staff have reviewed a legal document and found it sufficient to be issued to a standard user engaged by the enterprise account. "Action Needed" indicates that legal issues exist with the document and that a plan lawyer should be consulted. Clicking on the document will populate the Main Dashboard **416** with the complete document so that it can be viewed. From the Dashboard **416,** live chats with plan staff **430** and/or staff lawyers can be opened. Exemplary wireframes for enterprise "Document" screens are depicted in **Figs. 9A-C**.

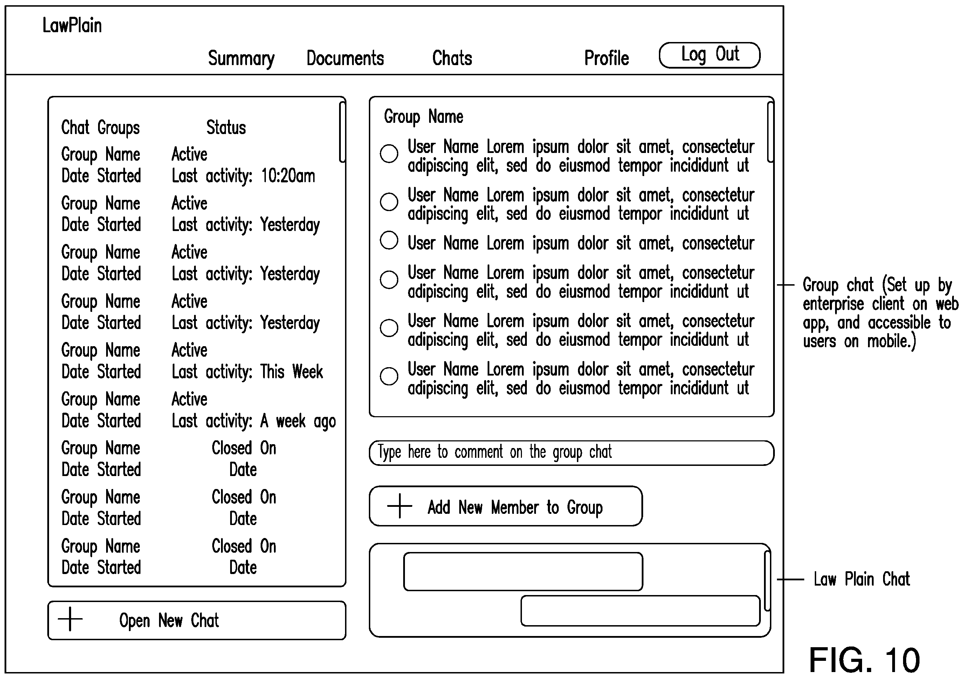

The Chats submenu **420** provides an itemized list of group chats **431** opened by the enterprise account. For each group chat, the App displays the group name, start date, time stamp for most recent activity, and active/inactive status. When a group chat is clicked, the full chat opens in the Main Dashboard **416.** Comments are displayed in chronological order, and a text field enables the enterprise account to participate in the chat. The enterprise account can engage plan staff in one-on-one chat regarding the group chat. The enterprise account can add new participants **432** to the group chat and can upload legal documents **433** to the entire group. The App enables user selection of alternate group chat **431** modes comprising text, VOIP or video chat. An exemplary wireframe for an enterprise "Group Chat" screen is depicted in **Fig. 10****.**

With respect to shared user information and communications in the Document and Chat operations, the Enterprise App informs the user of his/her privacy and confidentiality rights and records the user's informed consent and NDA agreements **434** in an immutable audit trail **435.**

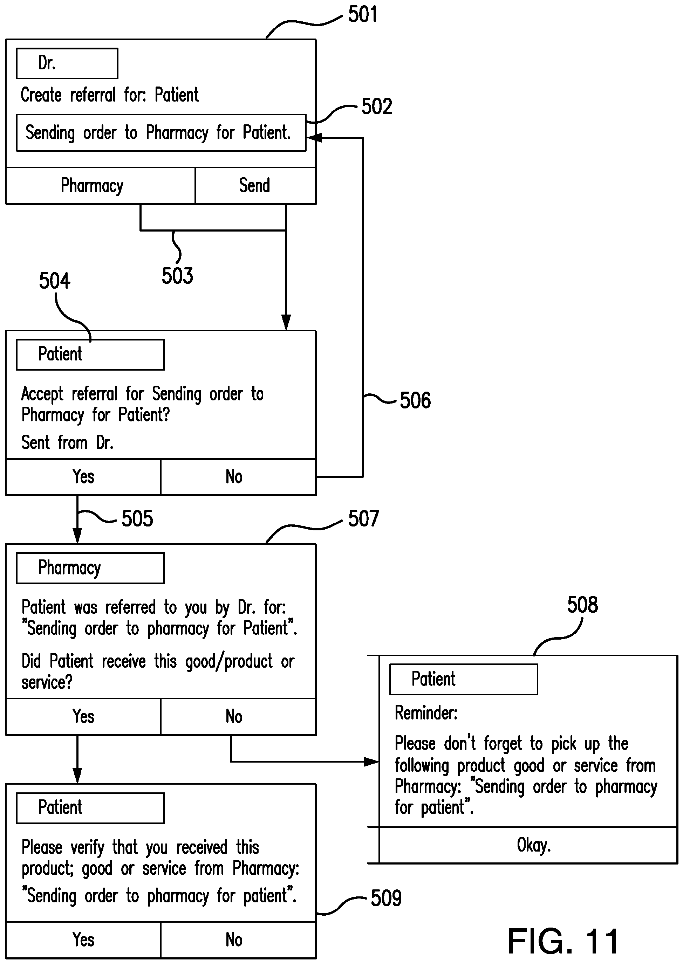

As shown on **Fig. 11****,** the Web App also enables referrals from one enterprise account to another. In this instance, a medical practice is referring a patient to a pharmacy business. In the first screen **501,** a text box **502** is provided for the referring medical enterprise to describe the purpose of the referral. A search bar **503** allows the referring enterprise to search for a pharmacy enterprise to which to refer the patient. The second screen **504** notifies the patient of the proposed referral and elicits the patient's consent **505.** If the patient declines the referral **506,** the referring medical practice can propose another pharmacy referral. If the patient accepts, the pharmacy is notified **507,** and verifies whether or not the patient has received the product or service **508 509.** The process audits and records the patient's consent to the referral as well as their satisfaction with the services provided by the referred business.

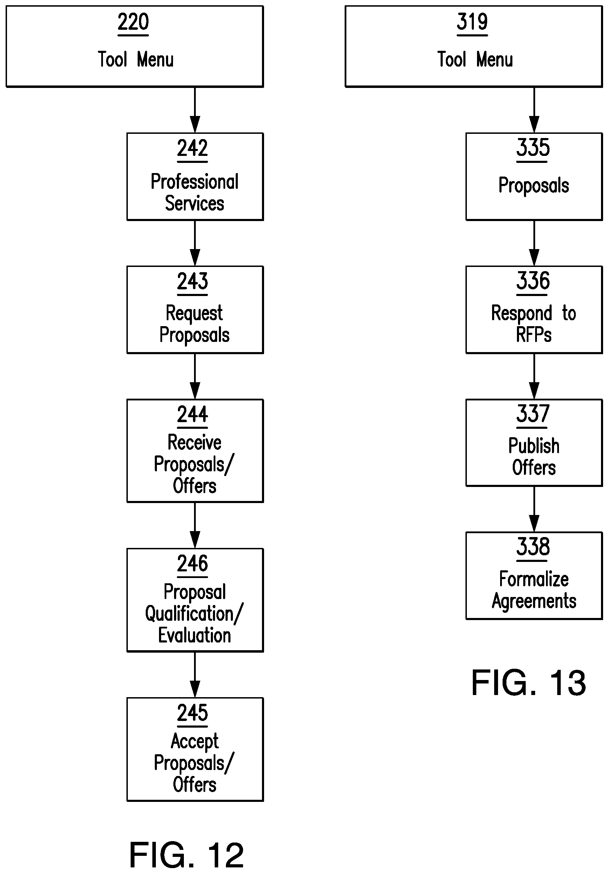

Referring to **Figs. 2****,** **4****,** and **12****,** exemplary embodiments of the User App **210** and the Web App **410** feature a Professional Services submenu **242 436** under the Tool Menu **220** and the Dashboard Main Menu **416,** respectively. Using these tabs, a standard user or enterprise user specifies the professional services **242 436** for which proposals are sought **243 437.** Referring to **Figs. 3** and **13****,** the Professional App features a Proposals submenu **335** under the Tools Menu **319,** through which participating professionals respond to requests for proposals **336** with responsive proposals, which are received by the originating User App **244** or Web App **438,** where the proposals can be accepted **245 439.**

Alternatively, participating professionals can use the Professional App **310** to initiate offers for specified professional services at specified fees **337,** which offers **337** are received by standard users **244** with the User App **210** or by enterprise users **438** with the Web App **410.** When such a professional offer **337** is accepted by a user **245 439,** the professional proceeds through the submenus to formalize a professional services agreement **338.**

For example, a standard user who is building a new home could solicit fixed-fee proposals from architects to design the home to certain specifications and could also solicit fixed-fee proposals from attorneys to draft the architectural services contract. The standard user could also accept a published fixed-fee offer by an engineering enterprise user to design and install a septic system for the new home.

In the User App **210** and the Web App **410,** the respective Professional Services submenus **242 436** also include a Proposal Qualification/Evaluation option **246 440.** The Proposal Qualification/Evaluation option **246 440** allows a standard user or an enterprise user to define minimum qualifications for professionals who want to submit fixed-fee proposals for the specified services. For example, a standard user seeking fixed-fee proposals from attorneys to represent the user in a divorce case could stipulate that proposals only be accepted from only certified civil trial attorneys. The App software will then apply the stipulated qualifications to generate a "short list" of qualifying proposals.

The Proposal Qualification/Evaluation option **246 440** also allows a standard user or enterprise user to establish multiple criteria for evaluating professional services proposals. Using such evaluation criteria, the App software will then rank the proposals based on the evaluation criteria. For example, the standard user seeking a divorce trial attorney could define evaluation criteria such as: five or more years of trial experience, at least ten fully litigated cases, and membership in the family law section of the state bar association. The App software will then assign to each proposal a "grade" of 0 through 3 based on compliance with the foregoing criteria.

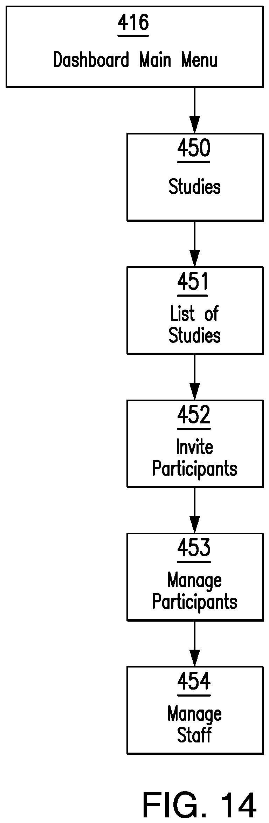

In some embodiments, the Web App **410** can also include a Studies submenu **450** under the Dashboard Main Menu **416,** as depicted in **Fig. 14****.** Under the Studies submenu **450,** an enterprise user can manage a range of technical, research (including academic and medical), and/or clinical studies, such as testing of a new product or clinical trials of a new pharmaceutical.

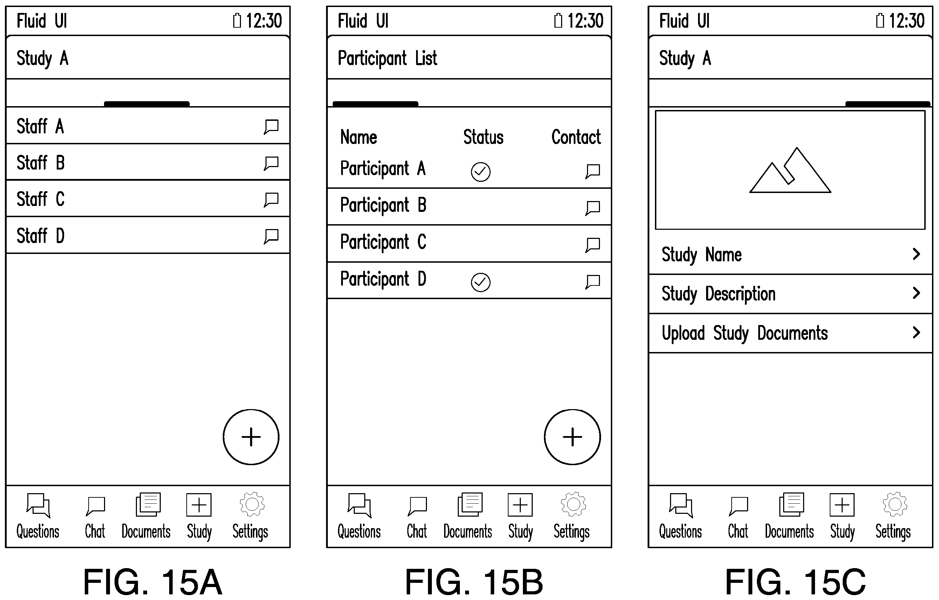

Under the Studies submenu **450,** the enterprise user has access to a list of ongoing studies **451,** invites participants to the studies **452,** and manages participants **453** and staff **454** associated with the studies. For example, through the management of participants, the enterprise can track and record compliance with clinical/research guidelines so to reduce the risk of liability arising from non-compliant participants. Exemplary wireframes for study management are depicted in **Figs. 15A-C**.

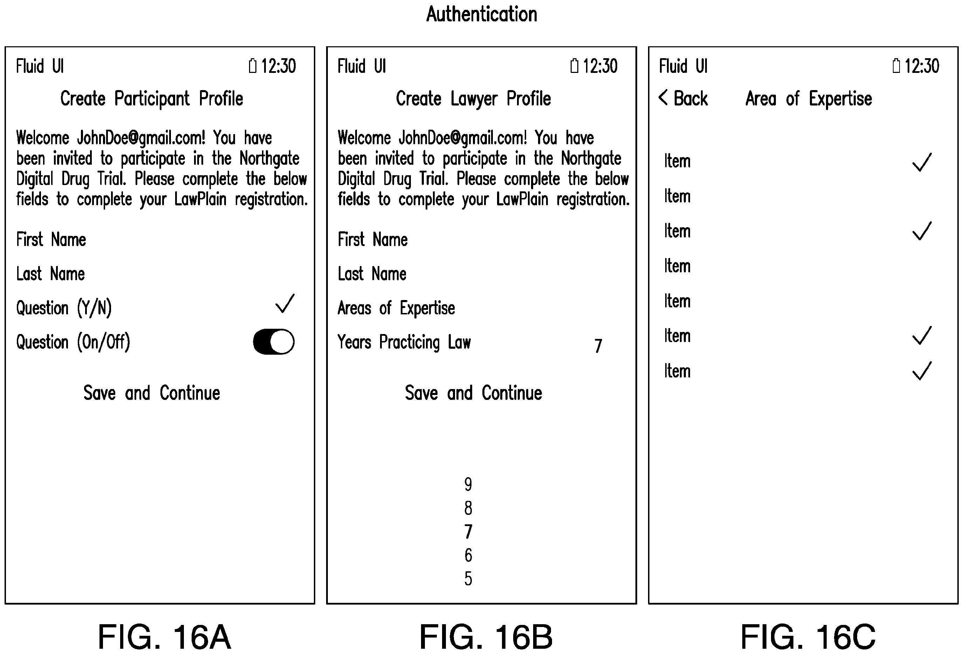

Exemplary authentication wireframes for study participants and professionals are shown in **Figs. 16A-C**. The authentication process can also include password-protected permissions for access to study data and documents, depending on the role of the participant, staff or professional involved. Such permissions can allow designated staff and/or professionals to review data and draft reports relating to the studies and to edit draft documents, depending on the level of permissions.

In the case of studies subject to regulatory review and standards, such as FDA drug approvals, the software automatically associates the requisite documents and forms with each study category and automatically updates the documents and forms to the latest versions.

As authorized by the supervisor of the enterprise account, the Chat submenu **420** of the Web App **410** can be used for communications between study staff, supervisors, professionals and/or participants. The Chat **420** system can be used to track activities of staff and participants, obtain and document required consents **434** and provide audited risk management **435.**

Optionally, the Studies submenu **450** can be particularly tailored to the requirements of certain enterprise uses, subject to a commensurate fee.

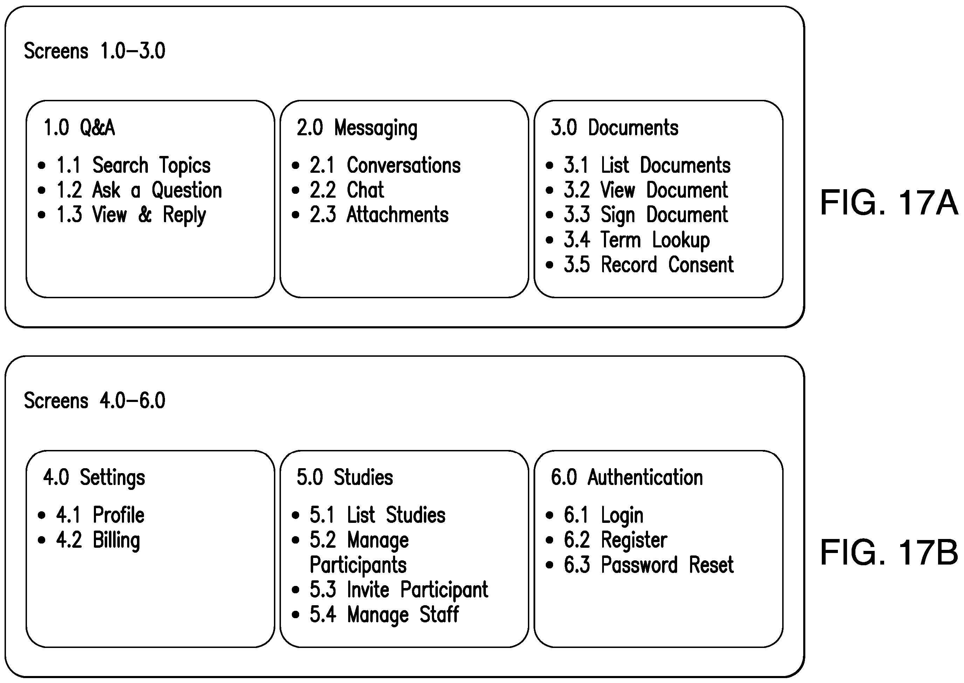

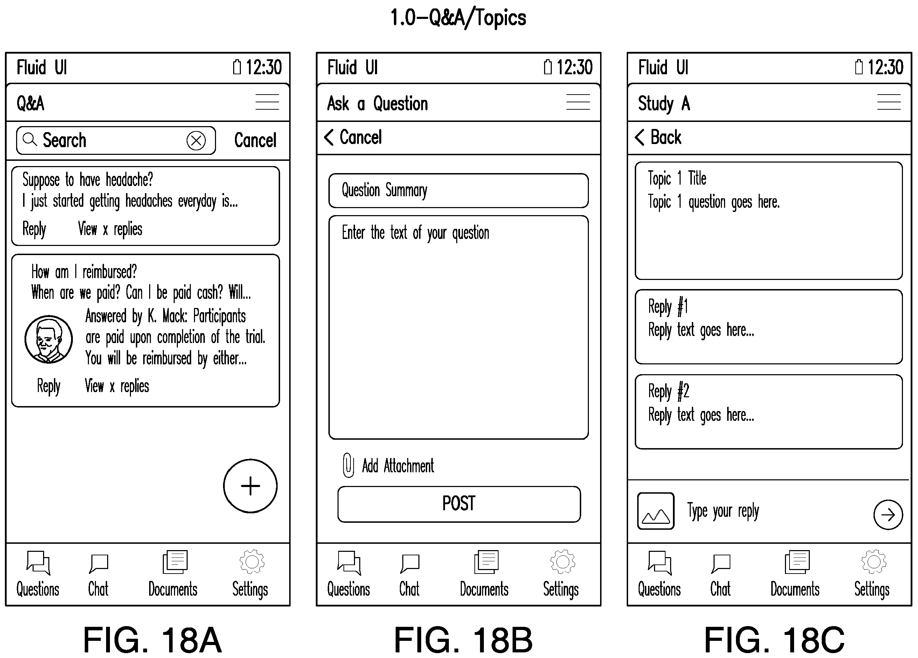

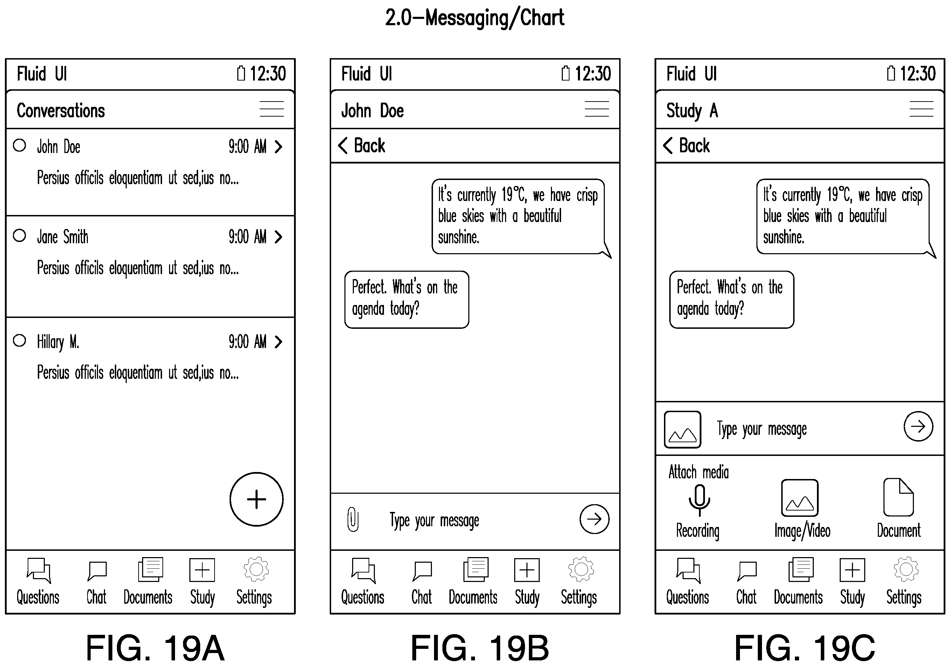

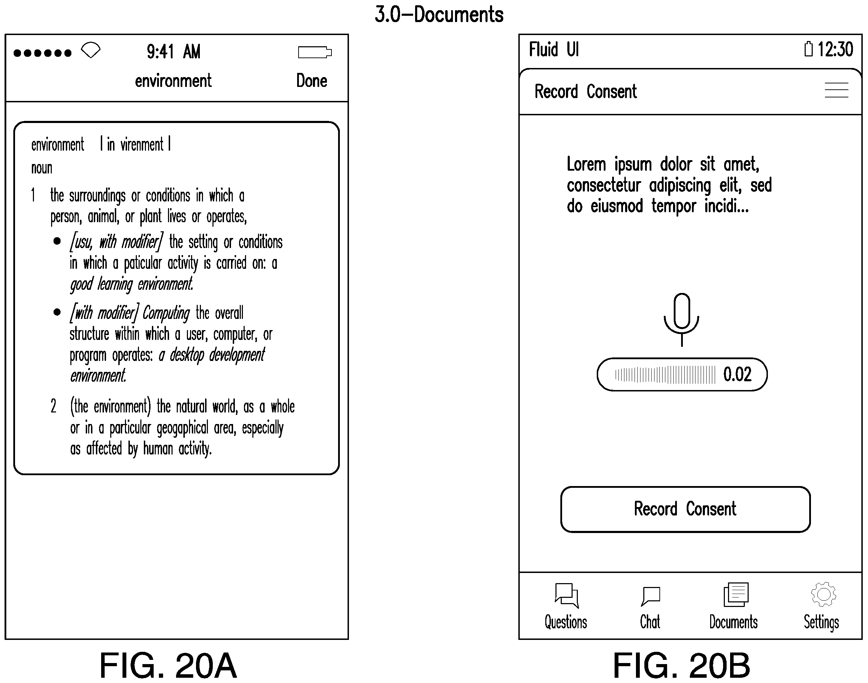

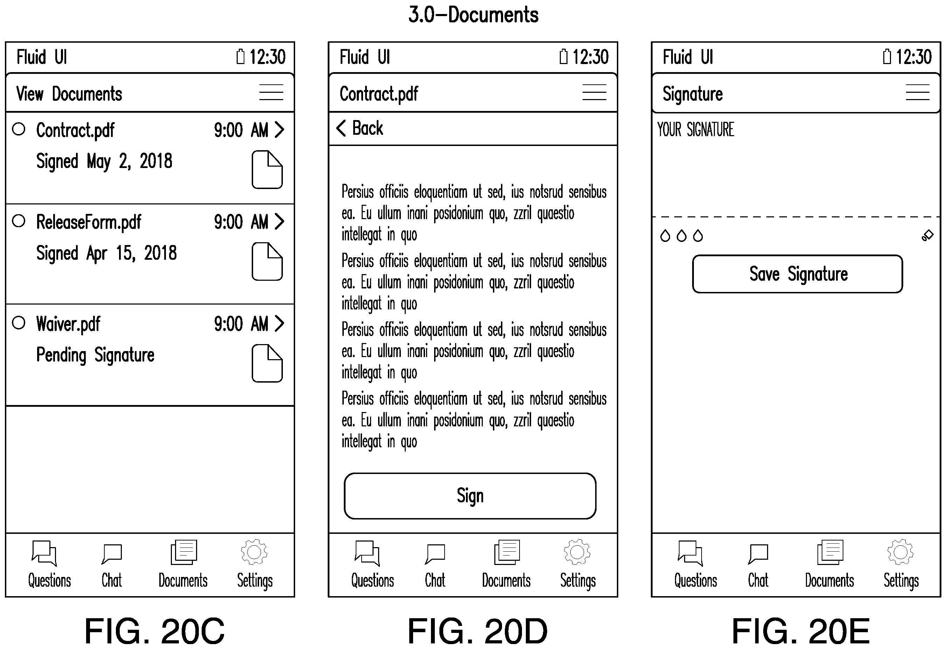

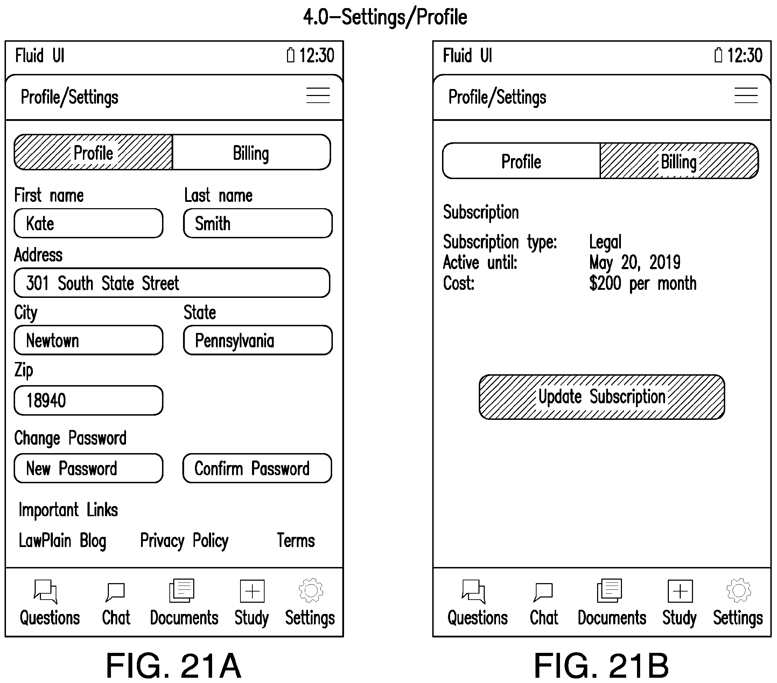

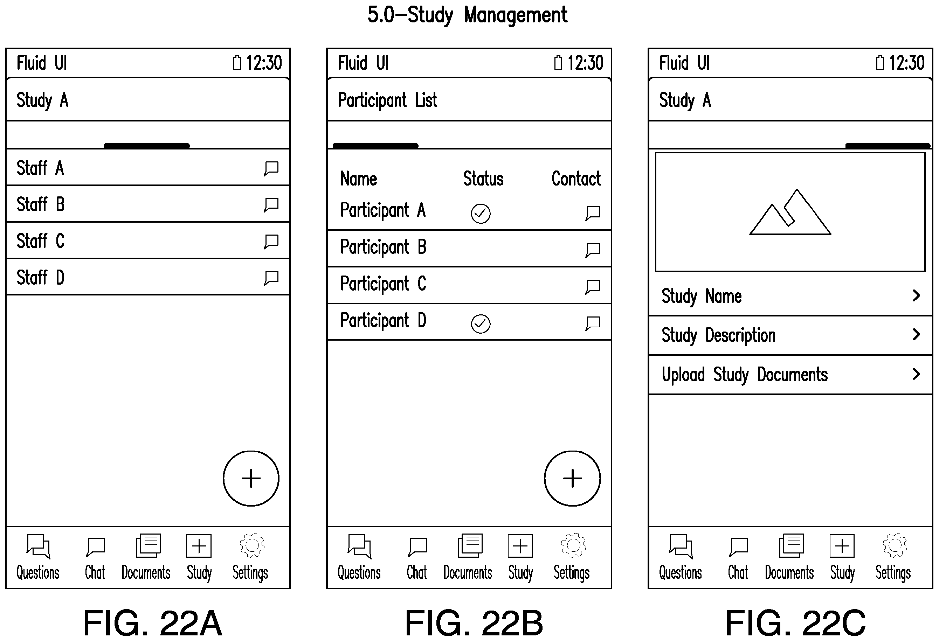

**Figs. 17A-17B** display an exemplary information architecture for a Studies menu tailored to clinical trials of new pharmaceutical products. Corresponding exemplary wireframes for each information component are depicted in **Figs. 18A-18C****,** for Q&A, **Figs. 19A-19C****,** for Messaging, **Figs. 20A-20E** for Documents, **Figs. 21A-21B** for Settings, and **Figs. 22A-22E** for Study Management.

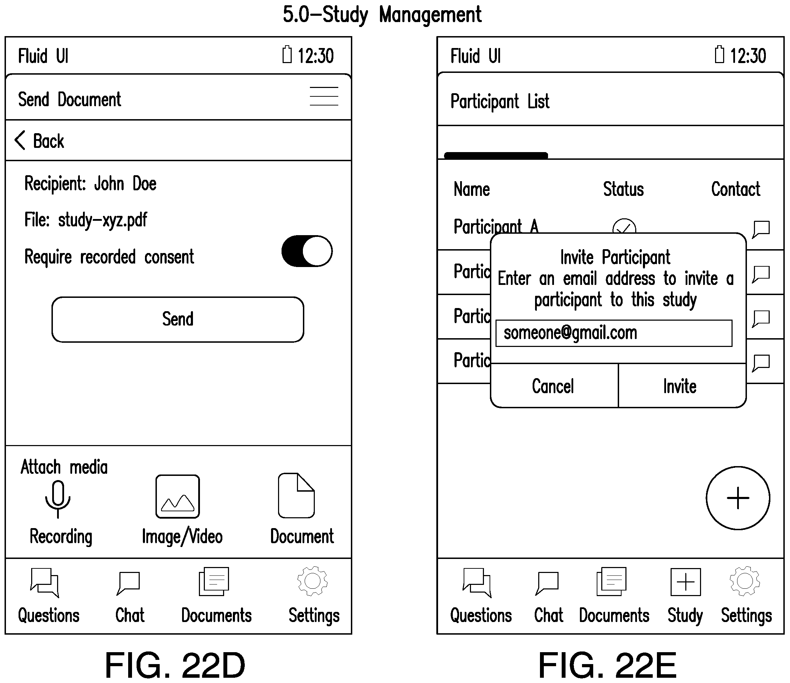

Referring to the foregoing figures, a supervisor of the clinical trials can invite a standard user to be a participant in the trials, as shown in **Fig. 22E****,** the supervisor and can require a recorded consent from the participant, as shown in **Fig. 20B** and **Fig. 22D****.** The supervisor can edit study settings to specify allowed communications between participants, as shown in **Fig.**

**19A,** and can upload documents to participants, including consent forms and instructions, as shown in **Fig. 20B** and **Fig. 20C****.** Under the Study Management functions, the supervisor can track the activities of clinical trial participants and staff, as shown in **Figs. 22A-22C****.**

Supervisors, participants and staff can view a list of all clinical trials they are involved in. Supervisors can select, add or replace staff in each of their active clinical trials. The App will provide instructions to executives of the sponsoring pharmaceutical enterprise regarding selection of supervisors, staff and professionals for the clinical trial team, based on their credentials and assignment of roles in the team. Once the team members are selected, their profiles are uploaded to the App and can be viewed by authorized team members. The App gives the team members specific instructions as to how to conduct their respective tasks in the clinical trial. The clinical data is collected by the App and securely stored in the System Database, with access based on team member permissions.

The Studies Management functions can optionally include an expedited preliminary product evaluation procedure for critically assessing and deconstructing a producer's claims as to the therapeutic efficacy and/or market potential of a new pharmaceutical or medical device product. The preliminary product evaluation procedure generates a plain language assessment of the producer's claims so as to guide investment choices and direct funds to the most promising products, where necessary switching to surrogate products to replace those which cannot withstand rigorous technical scrutiny. The aim is enable informed decision making and avoid reliance on claims which ultimately prove to be specious and lead to litigation.

The present invention assures that the most current versions of professional forms are always in use on its platform. Forms associated with professional services are automatically updated as of the release date of new form versions. This is done either by subscription arrangements with the relevant form-issuing entities, or by release-date downloads from their public websites. For example, a participating medical professional would automatically be supplied with the latest versions of HIPAA forms sent by the System Server **111 (****Fig. 1****)** to the Professional App **310,** based on subscription services with state medical regulatory agencies.

The system of present invention also assures that its participating professionals are promptly notified of any changes in regulations or standards affecting the services they render to standard and enterprise users. The system software receives notices of all relevant changes in regulations and standards through subscription arrangements with regulatory and standards-setting entities or by notice-date downloads from their public websites. For example, a participating physician who has been consulted by a standard user concerning high blood pressure would receive notices regarding FDA approvals of new blood pressure medications.

## Claims

1. An integrated computerized network system which initiates, mediates, manages, tracks, records and audits multiple network interactions between and among multiple system users, consisting of multiple individual standard users, multiple enterprise users and multiple participating professionals, the network system comprising:
system software, comprising a system database, a server software, at least one downloadable native User App, for use by the standard users, wherein the User App enables each of the standard users to highlight one or more selected terminologies in any one or more shared user files or shared user documents, and wherein the User App displays terminology definitions for each of the selected terminologies, at least one downloadable native Professional App, for use by the participating professionals, wherein the Professional App enables any one of the participating professionals to view the status of any one or more shared professional files or shared professional documents, and at least one Web App, for use by the enterprise users, wherein the Web App enables network referrals of standard users between and among the enterprise users and the participating professionals, wherein the Professional App links to the Web App;
system hardware, comprising standard user pc devices, used by the standard users, enterprise pc devices, used by the enterprise users, professional pc devices, used by the participating professionals, and a system server, wherein the user pc devices run the User App, the enterprise pc devices access the Web App, the professional pc devices run the Professional App with a link to the Web App, and the system server runs the server software, and wherein the system hardware is interconnected through the Internet
wherein the network system enables a private communication linkage between any one of the standard users and any one of the professional users with whom the standard user has established a confidential relationship; and
wherein the network system uses a blockchain process to record and preserve all interactions between and among the system users in an immutable network audit trail, which is stored in the system database.

2. The network system according to claim 1, wherein the User App enables each of the standard users to upload or download the shared user files and the shared user documents to or from selected counterparties consisting of one or more of the participating professionals and or alternatively one or more of the enterprise users, and wherein the User App enables each of the standard users to open from within the shared files and the shared documents a live chat with the selected counterparties regarding the shared user files and the shared user documents and or alternatively regarding highlighted sections of the shared user files and the shared user documents which have been selected by the standard user.

3. The network system according to claim 2, wherein the User App alerts each of the standard users to actions required in connection with the shared user files and the shared user documents and enables each of the standard users to view the status of any one or more of the shared user files and the shared user documents and to agree or consent to any one or more of the shared user files and the shared user documents by a voice confirmation, by a touch screen confirmation, or by an electronic signature.

4. The network system according to claim 3, wherein the User App enables the standard user to select from multiple, progressively expansive levels of definitional depth and to select a definitional medium for each of the selected terminologies.

5. The network system according to claim 4, wherein the Web App enables any one of the enterprise users to upload or download shared web files and shared web documents to or from selected web counterparties, consisting of one or more of the participating professionals, and or alternatively one or more of the standard users, and or alternatively one or more network staff professionals, and wherein the Web App enables the enterprise user to conduct a group live chat among the selected web counterparties regarding the shared web files and the shared web documents and or alternatively regarding highlighted sections of the shared web files and the shared web documents.

6. The network system according to claim 5, wherein the Professional App enables any one of the participating professionals to upload or download the shared professional files or the shared professional documents to or from selected professional counterparties, consisting of one or more of the participating professionals, and or alternatively one or more of the standard users, and or alternatively one or more of the enterprise users.

7. The network system according to claim 6, wherein the Professional App prompts the participating professional for actions required in connection with the shared professional files and the shared professional documents, and wherein the Professional App enables the participating professional to send messages to or engage in a professional live chat with any one of the selected professional counterparties with respect to actions required in connection with the shared professional files and the shared professional documents.

8. The network system according to claim 7, wherein the User App, the Web App and the Professional App each use a blockchain process to immutably monitor, track, record and audit compliance with requirements pertaining to legal and professional standards, confidentiality, conflicts-of-interest and informed consent, and wherein the network system compiles and stores an immutable compliance audit trail in the system database.

9. The network system according to claim 8, wherein the Professional App automatically updates the shared professional files and the shared professional documents in compliance with relevant changes required by governmental and private regulatory entities, and wherein the Professional App automatically notifies each of the participating professionals of changes in regulatory requirements and standards affecting services performed by the participating professional in connection with the network system.

10. The network system according to claim 9, wherein the Web App uses a blockchain process to immutably record and audit informed consent of the standard user to the network referral and satisfaction of the standard user with the network referral, and wherein the network system compiles and stores an immutable referral audit trail in the system database.

11. The network system according to claim 10, wherein the User App and Web App enable any one of the standard users and the enterprise users, respectively, to issue a request for proposal (RFP) from qualified participating professionals for specified professional services, and wherein the Professional App enables the qualified participating professionals to submit professional services proposals in response to the RFP.

12. The network system according to claim 11, wherein the User App and the Web App enable the standard users and the enterprise users, respectively, to define minimum professional qualifications in connection with the RFP, and wherein the User App and the Web App apply the minimum professional qualifications to the submitted professional services proposals to generate a short list of qualifying professional services proposals.

13. The network system according to claim 12, wherein the User App and the Web App enable the standard users and the enterprise users, respectively, to define multiple proposal evaluation criteria for evaluating the qualifying professional services proposals, and wherein the User App and the Web App apply the proposal evaluation criteria to rank the qualifying professional services proposals.

14. The network system according to claim 13, wherein the Web App contains a Studies Module, which enables any one of the enterprise users to manage enterprise studies comprising technical, research, academic, medical, pharmaceutical, and or alternatively clinical studies, including new product testing and clinical trials of new pharmaceuticals.

15. The network system according to claim 14, wherein the Studies Module enables the enterprise user to access a list of ongoing enterprise studies, to invite study participants, study staff and study professionals to any one of the enterprise studies, and to manage the study participants, the study staff and the study professionals, and wherein the Studies Module uses a blockchain process to immutably monitor, record, track and audit compliance with applicable regulations and guidelines, and wherein the network system compiles and stores an immutable studies audit trail in the system database.

16. The network system according to claim 15, wherein the Studies Module incorporates an authentication process for access to study data and study documents, based on respective permissions associated with the study participants, the study staff and the study professionals.

17. The network system according to claim 16, wherein the Studies Module incorporates a compliance process, which automatically updates relevance regulatory requirements, standards, guidelines and forms, associates requisite study documents and requisite study forms for each of multiple study categories, and automatically updates the requisite study documents and the requisite study forms to current versions.

18. The network system according to claim 17, wherein the Studies Module incorporates a live chat function, which enables communications between and among the study participants, the study staff, the study professionals, and one or more study supervisors, and which tracks activities of the study participants, the study staff and the study professionals, and which obtains required informed consent from the study participants.

19. The network system according to claim 18, wherein the Studies Module uses a blockchain process to immutably monitor, record, track and audit the authentication process, the compliance process and the live chat functions, and to provide audited risk management, and wherein the network system compiles and stores an immutable risk audit trail in the system database.

20. The network system according to claim 19, wherein the Studies Module provides instructions to the enterprise users regarding credentials-based selections of multiple studies team members comprising the one or more study supervisors, the study staff and the study professionals, and wherein profiles of the studies team members uploaded to the Web App can be viewed by authorized studies team members, and wherein the Studies Module provides specific instructions to the studies team members as to how to conduct assigned tasks in the enterprise studies.

21. The network system according to claim 20, wherein the Studies Module incorporates an expedited preliminary product evaluation procedure for testing and clinical trials of a new pharmaceutical or medical device product, and wherein the preliminary product evaluation procedure develops, on an expedited basis, a plain language assessment of a therapeutic efficacy and a market potential for the new pharmaceutical or medical device product based on a critical analysis and a deconstruction of a producer's claims relating to the therapeutic efficacy of the new pharmaceutical or medical device product.

22. The network system according to claim 21, wherein the preliminary product evaluation procedure further develops, on an expedited basis, recommendations regarding investment in further evaluation, testing and trials of the new pharmaceutical or medical device product, as compared with alternative investments in one or more surrogate pharmaceutical or medical device products.

## Patentansprüche

1. Integriertes computerisiertes Netzwerksystem, das mehrere Netzwerkinteraktionen zwischen und unter mehreren Systemnutzern, die sich aus mehreren individuellen Standardnutzern, mehreren Unternehmensnutzern und mehreren teilnehmenden Fachkräften zusammensetzen, initiiert, vermittelt, verwaltet, verfolgt, aufzeichnet und prüft, wobei das Netzwerksystem Folgendes umfasst:
eine Systemsoftware, umfassend eine Systemdatenbank, eine Serversoftware, mindestens eine herunterladebare native Nutzer-App zur Verwendung durch die Standardnutzer, wobei die Nutzer-App jedem der Standardnutzer ermöglicht, eine oder mehrere ausgewählte Terminologien in einer oder mehreren beliebigen gemeinsam genutzten Nutzerdateien oder gemeinsam genutzten Nutzerdokumenten hervorzuheben und wobei die Nutzer-App Terminologiedefinitionen für jede der ausgewählten Terminologien anzeigt, mindestens eine herunterladebare native Fachkraft-App zur Verwendung durch die teilnehmenden Fachkräfte, wobei die Fachkraft-App beliebigen der teilnehmenden Fachkräfte ermöglicht, den Status einer oder mehrerer beliebiger gemeinsam genutzter Fachkraftdateien oder gemeinsam genutzter Fachkraftdokumente einzusehen, und mindestens eine Web-App zur Verwendung durch die Unternehmensnutzer, wobei die Web-App Netzwerküberweisungen von Standardnutzern zwischen und unter den Unternehmensnutzern und den teilnehmenden Fachkräften ermöglicht, wobei die Fachkraft-App mit der Web-App verlinkt ist;
eine Systemhardware, umfassend Standardnutzer-PC-Geräte, die durch die Standardnutzer verwendet werden, Unternehmens-PC-Geräte, die durch die Unternehmensnutzer verwendet werden, Fachkraft-PC-Geräte, die durch die teilnehmenden Fachkräfte verwendet werden, und einen Systemserver, wobei die Nutzer-PC-Geräte die Nutzer-App ausführen, die Unternehmens-PC-Geräte auf die Web-App zugreifen, die Fachkraft-PC-Geräte die Fachkraft-App mit einem Link zu der Web-App ausführen und der Systemserver ferner die Serversoftware ausführt und wobei die Systemhardware über das Internet verbunden ist,
wobei das Netzwerksystem eine private Kommunikationsverknüpfung zwischen beliebigen der Standardnutzer und beliebigen der Fachkraftnutzer, mit denen der Standardnutzer eine vertrauliche Beziehung aufgebaut hat, ermöglicht; und
wobei das Netzwerksystem einen Blockchain-Prozess verwendet, um alle Interaktionen zwischen und unter den Systemnutzern in einem unveränderbaren Netzwerk-Audit-Trail, der in der Systemdatenbank gespeichert ist, aufzuzeichnen und zu bewahren.

2. Netzwerksystem nach Anspruch 1, wobei die Nutzer-App jedem der Standardnutzer ermöglicht, die gemeinsam genutzten Nutzerdateien und die gemeinsam genutzten Nutzerdokumente zu oder von ausgewählten Gegenparteien, die sich aus einer oder mehreren der teilnehmenden Fachkräfte und/oder alternativ einem oder mehreren der Unternehmensnutzer zusammensetzen, hochzuladen bzw. herunterzuladen, und wobei die Nutzer-App jedem der Standardnutzer ermöglicht, aus den gemeinsam genutzten Dateien und den gemeinsam genutzten Dokumenten einen Live-Chat mit der ausgewählten Gegenpartei bezüglich der gemeinsam genutzten Nutzerdateien und der gemeinsam genutzten Nutzerdokumente und/oder alternativ bezüglich hervorgehobener Abschnitte der gemeinsam genutzten Nutzerdateien und der gemeinsam genutzten Nutzerdokumente, die durch den Standardnutzer ausgewählt wurden, zu öffnen.

3. Netzwerksystem nach Anspruch 2, wobei die Nutzer-App jeden der Standardnutzer auf Aktionen hinweist, die im Zusammenhang mit den gemeinsam genutzten Nutzerdateien und den gemeinsam genutzten Nutzerdokumenten erforderlich sind, und jedem der Standardnutzer ermöglicht, den Status einer oder mehrerer beliebiger der gemeinsam genutzten Nutzerdateien und der gemeinsam genutzten Nutzerdokumente einzusehen und mittels sprachlicher Bestätigung, mittels Berührungsbildschirmbestätigung oder mittels elektronischer Signatur eine Zustimmung oder Einwilligung zu einer oder mehreren der gemeinsam genutzten Nutzerdateien und der gemeinsam genutzten Nutzerdokumente zu geben.

4. Netzwerksystem nach Anspruch 3, wobei die Nutzer-App dem Standardnutzer ermöglicht, aus mehreren zunehmend umfangreichen Definitionstiefenebenen auszuwählen und ein Definitionsmedium für jede der ausgewählten Terminologien auszuwählen.

5. Netzwerksystem nach Anspruch 4, wobei die Web-App beliebigen der Unternehmensnutzer ermöglicht, gemeinsam genutzte Webdateien und gemeinsam genutzte Webdokumente zu oder von ausgewählten Web-Gegenparteien, die sich aus einer oder mehreren der teilnehmenden Fachkräfte und/oder alternativ einem oder mehreren der Standardnutzer und/oder alternativ einer oder mehreren Netzwerk-Mitarbeiterfachkräften zusammensetzen, hochzuladen bzw. herunterzuladen, und wobei die Web-App dem Unternehmensnutzer ermöglicht, einen Gruppen-Live-Chat unter den ausgewählten Web-Gegenparteien bezüglich der gemeinsam genutzten Webdateien und der gemeinsam genutzten Webdokumente oder alternativ bezüglich hervorgehobener Abschnitte der gemeinsam genutzten Webdateien und der gemeinsam genutzten Webdokumente durchzuführen.

6. Netzwerksystem nach Anspruch 5, wobei die Fachkraft-App beliebigen der teilnehmenden Fachkräfte ermöglicht, die gemeinsam genutzten Fachkraftdateien oder die gemeinsam genutzten Fachkraftdokumente zu oder von ausgewählten Fachkraft-Gegenparteien, die sich aus einer oder mehreren der teilnehmenden Fachkräfte und/oder alternativ einem oder mehreren der Standardnutzer und/oder alternativ einem oder mehreren der Unternehmensnutzer zusammensetzen, hochzuladen bzw. herunterzuladen.

7. Netzwerksystem nach Anspruch 6, wobei die Fachkraft-App die teilnehmende Fachkraft zu Aktionen auffordert, die im Zusammenhang mit den gemeinsam genutzten Fachkraftdateien und den gemeinsam genutzten Fachkraftdokumenten erforderlich sind, und wobei die Fachkraft-App der teilnehmenden Fachkraft das Senden von Nachrichten an einen oder das Teilnehmen an einem Fachkraft-Live-Chat mit beliebigen der ausgewählten Fachkraft-Gegenparteien bezüglich Aktionen, die im Zusammenhang mit den gemeinsam genutzten Fachkraftdateien und den gemeinsam genutzten Fachkraftdokumenten erforderlich sind, ermöglicht.

8. Netzwerksystem nach Anspruch 7, wobei die Nutzer-App, die Web-App und die Fachkraft-App jeweils einen Blockchain-Prozess verwenden, um eine Compliance mit Anforderungen bezüglich rechtlicher und professioneller Standards, Verschwiegenheitspflicht, Interessenkonflikten und informierter Einwilligung unveränderbar zu überwachen, zu verfolgen, aufzuzeichnen und zu prüfen, und wobei das Netzwerksystem einen unveränderbaren Compliance-Audit-Trail in der Systemdatenbank kompiliert und speichert.

9. Netzwerksystem nach Anspruch 8, wobei die Fachkraft-App die gemeinsam genutzten Fachkraftdateien und die gemeinsam genutzten Fachkraftdokumente in Übereinstimmung mit durch Regierungsbehörden und private Regulierungsstellen erforderten relevanten Änderungen automatisch aktualisiert und wobei die Fachkraft-App jede der teilnehmenden Fachkräfte über Änderungen an Regulierungsanforderungen und Standards, die durch die teilnehmende Fachkraft ausgeübte Dienste im Zusammenhang mit dem Netzwerksystem betreffen, benachrichtigt.

10. Netzwerksystem nach Anspruch 9, wobei die Web-App einen Blockchain-Prozess verwendet, um eine informierte Einwilligung des Standardnutzers zu der Netzwerküberweisung und eine Zufriedenheit des Standardnutzens mit der Netzwerküberweisung unveränderbar aufzuzeichnen und zu prüfen, und wobei das Netzwerksystem einen unveränderbaren Überweisungs-Audit-Trail in der Systemdatenbank kompiliert und speichert.

11. Netzwerksystem nach Anspruch 10, wobei die Nutzer-App und die Web-App beliebigen der Standardnutzer bzw. der Unternehmensnutzer ermöglichen, eine Angebotsanfrage (RFT: Request For Proposal) von qualifizierten teilnehmenden Fachkräften für spezifizierte professionelle Dienste zu stellen, und wobei die Fachkraft-App den qualifizierten teilnehmenden Fachkräften ermöglicht, als Reaktion auf die RFT Angebote professioneller Dienste einzureichen.

12. Netzwerksystem nach Anspruch 11, wobei die Nutzer-App und die Web-App den Standardnutzern bzw. den Unternehmensnutzern ermöglichen, professionelle Mindestqualifikationen im Zusammenhang mit der RFT zu definieren, und wobei die Nutzer-App und die Web-App die professionellen Mindestqualifikationen auf die eingereichten Angebote professioneller Dienste anwenden, um eine kurze Liste von Angeboten qualifizierter professioneller Dienste zu erzeugen.

13. Netzwerksystem nach Anspruch 12, wobei die Nutzer-App und die Web-App den Standardnutzern bzw. den Unternehmensnutzern ermöglichen, mehrere Angebotsbewertungskriterien zum Bewerten der Angebote qualifizierter professioneller Dienste zu definieren, und wobei die Nutzer-App und die Web-App die Angebotsbewertungskriterien anwenden, um die Angebote qualifizierter professioneller Dienste einzustufen.

14. Netzwerksystem nach Anspruch 13, wobei die Web-App ein Studienmodul enthält, das beliebigen der Unternehmensnutzer ermöglicht, Unternehmensstudien, die technische, Forschungs-, akademische, medizinische, pharmazeutische und/oder alternativ klinische Studien, darunter Tests neuer Produkte und klinische Studien neuer Arzneimittel, zu verwalten.

15. Netzwerksystem nach Anspruch 14, wobei das Studienmodul dem Unternehmensnutzer ermöglicht, auf eine Liste laufender Unternehmensstudien zuzugreifen, um Studienteilnehmer, Studienmitarbeiter und Studienfachkräfte zu beliebigen der Unternehmensstudien einzuladen und die Studienteilnehmer, die Studienmitarbeiter und die Studienfachkräfte zu verwalten, und wobei das Studienmodul einen Blockchain-Prozess verwendet, um eine Compliance mit geltenden Regelungen und Richtlinien unveränderbar zu überwachen, aufzuzeichnen, zu verfolgen und zu prüfen, und wobei das Netzwerksystem einen unveränderbaren Studien-Audit-Trail in der Systemdatenbank kompiliert und speichert.

16. Netzwerksystem nach Anspruch 15, wobei das Studienmodul einen Authentifizierungsprozess zum Zugreifen auf Studiendaten und Studiendokumente basierend auf jeweiligen mit den Studienteilnehmern, den Studienmitarbeitern und den Studienfachkräften assoziierten Genehmigungen beinhaltet.

17. Netzwerksystem nach Anspruch 16, wobei das Studienmodul einen Compliance-Prozess beinhaltet, der relevante Regulierungsanforderungen, Standards, Richtlinien und Formulare aktualisiert, erforderliche Studiendokumente und erforderliche Studienformulare für jede der mehreren Studienkategorien assoziiert und die erforderlichen Studiendokumente und die erforderlichen Studienformulare automatisch auf aktuelle Versionen aktualisiert.

18. Netzwerksystem nach Anspruch 17, wobei das Studienmodul eine Live-Chat-Funktion beinhaltet, die eine Kommunikation zwischen und unter den Studienteilnehmern, den Studienmitarbeitern, den Studienfachkräften und einem oder mehreren Studienaufsehern ermöglicht und die Aktivitäten der Studienteilnehmer, der Studienmitarbeiter und der Studienfachkräfte verfolgt und die eine erforderliche informierte Einwilligung von den Studienteilnehmern einholt.

19. Netzwerksystem nach Anspruch 18, wobei das Studienmodul einen Blockchain-Prozess verwendet, um den Authentifizierungsprozess, den Compliance-Prozess und die Live-Chat-Funktionen unveränderbar zu überwachen, aufzuzeichnen, zu verfolgen und zu prüfen, und um ein geprüftes Risikomanagement bereitzustellen, und wobei das Netzwerksystem einen unveränderbaren Risiko-Audit-Trail in der Systemdatenbank kompiliert und speichert.

20. Netzwerksystem nach Anspruch 19, wobei das Studienmodul Anweisungen an die Unternehmensnutzer bezüglich Referenzen-basierter Auswahlen mehrerer Studienteammitglieder, umfassend den einen oder die mehreren Studienaufseher, die Studienmitarbeiter und die Studienfachkräfte, liefert und wobei auf die Web-App hochgeladene Profile der Studienteammitglieder von autorisierten Studienteammitgliedern eingesehen werden können und wobei das Studienmodul spezifische Anweisungen an die Studienteammitglieder bezüglich der Durchführung zugewiesener Aufgaben der Unternehmensstudie liefert.

21. Netzwerksystem nach Anspruch 20, wobei das Studienmodul eine beschleunigte vorläufige Produktevaluationsprozedur für Tests und klinische Studien eines neuen pharmazeutischen oder Medizingeräteprodukts beinhaltet und wobei die vorläufige Produktevaluationsprozedur auf beschleunigter Basis eine Klartextevaluation einer therapeutischen Wirksamkeit und eines Marktpotenzials für das neue pharmazeutische oder Medizingeräteprodukt basierend auf einer kritischen Analyse und einer Dekonstruktion von Herstellerangaben bezüglich der therapeutischen Wirksamkeit des neuen pharmazeutischen oder Medizingeräteprodukts entwickelt.

22. Netzwerksystem nach Anspruch 21, wobei die vorläufige Produktevaluationsprozedur ferner auf beschleunigter Basis Empfehlungen bezüglich Investitionen in weitere Evaluation, Tests und Studien des neuen pharmazeutischen oder Medizingeräteprodukts im Vergleich zu alternativen Investitionen in ein oder mehrere pharmazeutische oder Medizingeräte-Ersatzprodukte entwickelt.

## Revendications

1. Système réseau informatisé intégré qui initie, sert d'intermédiaire, gère, suit, enregistre et audite de multiples interactions en réseau entre et parmi de multiples utilisateurs du système, constitués de multiples utilisateurs standard individuels, de multiples utilisateurs entreprises et de multiples professionnels participants, le système réseau comprenant :
un logiciel système, comprenant une base de données système, un logiciel de serveur, au moins une Application pour Utilisateurs native téléchargeable, pour une utilisation par les utilisateurs standard, l'Application pour Utilisateurs permettant à chacun des utilisateurs standard de mettre en évidence une ou plusieurs terminologies sélectionnées dans un ou plusieurs quelconques fichiers utilisateurs partagés ou documents utilisateurs partagés, et l'Application pour Utilisateurs affichant des définitions de terminologies pour chacune des terminologies sélectionnées, au moins une Application pour Professionnels native téléchargeable, pour une utilisation par les professionnels participants, l'Application pour Professionnels permettant à l'un quelconque des professionnels participants de voir le statut d'un ou plusieurs quelconques fichiers professionnels partagés ou documents professionnels partagés, et au moins une Application Web, pour une utilisation par les utilisateurs entreprises, l'Application Web permettant des orientations dans le réseau d'utilisateurs standard entre et parmi les utilisateurs entreprises et les professionnels participants, l'Application pour Professionnels étant reliée à l'Application Web ;
du matériel système, comprenant des dispositifs PC d'utilisateurs standard, utilisés par les utilisateurs standard, des dispositifs PC d'entreprises, utilisés par les utilisateurs entreprises, des dispositifs PC de professionnels, utilisés par les professionnels participants, et un serveur système, les dispositifs PC d'utilisateurs exécutant l'Application pour Utilisateurs, les dispositifs PC d'entreprises accédant à l'Application Web, les dispositifs PC de professionnels exécutant l'Application pour Professionnels avec un lien vers l'Application Web, et le serveur système exécutant le logiciel serveur, et le matériel système étant interconnecté au moyen d'Internet,
le système réseau permettant une liaison de communication privée entre l'un quelconque des utilisateurs standard et l'un quelconque des utilisateurs professionnels avec lequel l'utilisateur standard a établi une relation confidentielle ; et
le système réseau utilisant un processus de chaîne de blocs pour enregistrer et préserver toutes les interactions entre et parmi les utilisateurs du système dans un chemin d'audit de réseau immuable, qui est stocké dans la base de données système.

2. Système réseau selon la revendication 1, dans lequel l'Application pour Utilisateurs permet à chacun des utilisateurs standard de téléverser ou télécharger les fichiers utilisateurs partagés et les documents utilisateurs partagés à destination ou en provenance de contreparties sélectionnées constituées d'un ou plusieurs des professionnels participants et/ou, autrement, un ou plusieurs des utilisateurs entreprises, et l'Application pour Utilisateurs permettant à chacun des utilisateurs standard d'ouvrir depuis l'intérieur des fichiers partagés et des documents partagés une discussion en direct avec les contreparties sélectionnées concernant les fichiers utilisateurs partagés et les documents utilisateurs partagés et/ou, autrement, concernant les sections mises en évidence des fichiers utilisateurs partagés et des documents utilisateurs partagés qui ont été sélectionnées par l'utilisateur standard.

3. Système réseau selon la revendication 2, dans lequel l'Application pour Utilisateurs alerte chacun des utilisateurs standard à propos d'actions requises en lien avec les fichiers utilisateurs partagés et les documents utilisateurs partagés et permet à chacun des utilisateurs standard de voir le statut d'un ou plusieurs quelconques des fichiers utilisateurs partagés et des documents utilisateurs partagés et d'accepter ou consentir à un ou plusieurs quelconques des fichiers utilisateurs partagés et des documents utilisateurs partagés par une confirmation vocale, par une confirmation via écran tactile, ou par une signature électronique.

4. Système réseau selon la revendication 3, dans lequel l'Application pour Utilisateurs permet à l'utilisateur standard de sélectionner parmi de multiples niveaux de profondeur de définition s'étendant progressivement et de sélectionner un support de définition pour chacune des terminologies sélectionnées.

5. Système réseau selon la revendication 4, dans lequel l'Application Web permet à l'un quelconque des utilisateurs entreprises de téléverser ou télécharger des fichiers web partagés et des documents web partagés à destination ou en provenance de contreparties web sélectionnées, constituées d'un ou plusieurs des professionnels participants et/ou, autrement, un ou plusieurs des utilisateurs standard, et/ou, autrement, un ou plusieurs professionnels personnels du réseau, et dans lequel l'Application Web permet à l'utilisateur entreprise de conduire une discussion de groupe en direct entre les contreparties web sélectionnées concernant les fichiers web partagés ou les documents web partagés et/ou, autrement, concernant les sections mises en évidence des fichiers web partagés ou des documents web partagés.

6. Système réseau selon la revendication 5, dans lequel l'Application pour Professionnels permet à l'un quelconque des professionnels participants de téléverser ou télécharger les fichiers professionnels partagés et les documents professionnels partagés à destination ou en provenance de contreparties sélectionnées, constituées d'un ou plusieurs des professionnels participants, et/ou, autrement, un ou plusieurs des utilisateurs standard, et/ou, autrement, un ou plusieurs des utilisateurs entreprises.

7. Système réseau selon la revendication 6, dans lequel l'Application pour Professionnels invite le professionnel participant à effectuer des actions requises en lien avec les fichiers professionnels partagés ou les documents professionnels partagés, et dans lequel l'Application pour Professionnels permet aux professionnels participant d'envoyer des messages à ou d'engager une discussion professionnelle en direct avec l'une quelconque des contreparties professionnelles sélectionnées concernant des actions requises en lien avec les fichiers professionnels partagés et les documents professionnels partagés.

8. Système réseau selon la revendication 7, dans lequel l'Application pour Utilisateurs, l'Application Web et l'Application pour Professionnels utilisent chacune un processus de chaîne de blocs pour surveiller, suivre, enregistrer et auditer de manière immuable la conformité avec des exigences relatives à des normes légales et professionnelles, à la confidentialité, aux conflits d'intérêt et au consentement informé, et dans lequel le système réseau compile et stocke un chemin d'audit de conformité immuable dans la base de données système.

9. Système réseau selon la revendication 8, dans lequel l'Application pour Professionnels met à jour automatiquement les fichiers professionnels partagés et les documents professionnels partagés en conformité avec des changements pertinents requis par des entités régulatrices gouvernementales et privées, et dans lequel l'Application pour Professionnels informe automatiquement chacun des professionnels participants de changements dans les exigences réglementaires et normes affectant des services exécutés par le professionnel participant en lien avec le système réseau.

10. Système réseau selon la revendication 9, dans lequel l'Application Web utilise un processus de chaîne de blocs pour enregistrer et auditer de manière immuable un consentement informé de l'utilisateur standard sur l'orientation dans le réseau et une satisfaction de l'utilisateur standard concernant l'orientation dans le réseau, et dans lequel le système réseau compile et stocke un chemin d'audit d'orientation immuable dans la base de données système.

11. Système réseau selon la revendication 10, dans lequel l'Application pour Utilisateurs et l'Application Web permettent respectivement à l'un quelconque des utilisateurs standard et des utilisateurs entreprises d'envoyer une demande de proposition (RFP) de la part de professionnels participants qualifiés pour des services professionnels spécifiés, et dans lequel l'Application pour Professionnels permet aux professionnels participants qualifiés de soumettre des propositions de services professionnels en réponse à la RFP.

12. Système réseau selon la revendication 11, dans lequel l'Application pour Utilisateurs et l'Application Web permettent respectivement aux utilisateurs standard et aux utilisateurs entreprises de définir des qualifications professionnelles minimales en lien avec la RFP, et dans lequel l'Application pour Utilisateurs et l'Application Web appliquent les qualifications professionnelles minimales aux propositions de services professionnels soumises pour générer une liste réduite de propositions de services professionnels éligibles.

13. Système réseau selon la revendication 12, dans lequel l'Application pour Utilisateurs et l'Application Web permettent respectivement aux utilisateurs standard et aux utilisateurs entreprises de définir de multiples critères d'évaluation de propositions pour évaluer les propositions de services professionnels éligibles, et dans lequel l'Application pour Utilisateurs et l'Application Web appliquent les critères d'évaluation de propositions pour classer les propositions de services professionnels éligibles.

14. Système réseau selon la revendication 13, dans lequel l'Application Web contient un Module Etudes, qui permet à l'un quelconque des utilisateurs entreprises de gérer des études d'entreprises comprenant des études techniques, de recherche, académiques, médicales, pharmaceutiques et/ou, autrement, cliniques, incluant des tests de nouveaux produits et des essais cliniques de nouveaux médicaments.

15. Système réseau selon la revendication 14, dans lequel le Module Etudes permet à l'utilisateur entreprise d'accéder à une liste d'études d'entreprises en cours, d'inviter des participants d'étude, des personnels d'étude et des professionnels d'étude à l'une quelconque des études d'entreprises, et de gérer les participants d'étude, les personnels d'étude et les professionnels d'étude, et dans lequel le Module Etudes utilise un processus de chaîne de blocs pour surveiller, enregistrer, suivre et auditer de manière immuable la conformité à des réglementations et directives applicables, et dans lequel le système réseau compile et stocke un chemin d'audit d'études immuable dans la base de données système.

16. Système réseau selon la revendication 15, dans lequel le Module Etudes incorpore un processus d'authentification pour accéder à des données d'étude et à des documents d'étude, en fonction de permissions respectives associées aux participants d'étude, aux personnels d'étude et aux professionnels d'étude.

17. Système réseau selon la revendication 16, dans lequel le Module Etudes incorpore un processus de conformité, qui met à jour automatiquement les exigences réglementaires, normes, directives et formulaires de pertinence, associe des documents d'étude requis et des formulaires d'étude requis pour chacune des multiples catégories d'étude, et met à jour automatiquement les documents d'étude requis et les formulaires d'étude requis vers des versions en cours.

18. Système réseau selon la revendication 17, dans lequel le Module Etudes incorpore une fonction de discussion en direct, qui permet des communications entre et parmi les participants d'étude, les personnels d'étude, les professionnels d'étude, et un ou plusieurs superviseurs d'étude, et qui suit les activités des participants d'étude, des personnels d'étude et des professionnels d'étude, et qui obtient les consentements informés requis des participants d'étude.

19. Système réseau selon la revendication 18, dans lequel le Module Etudes utilise un processus de chaîne de blocs pour surveiller, enregistrer, suivre et auditer de manière immuable le processus d'authentification, le processus de conformité et les fonctions de discussion en direct, et pour fournir une gestion du risque auditée, et dans lequel le système réseau compile et stocke un chemin d'audit de risque immuable dans la base de données système.

20. Système réseau selon la revendication 19, dans lequel le Module Etudes fournit des instructions aux utilisateurs entreprises concernant les sélections, sur la base de leurs compétences, de multiples membres d'équipes d'études comprenant le ou les superviseurs d'étude, les personnels d'étude et les professionnels d'étude, et dans lequel les profils des membres d'équipes d'études téléversés vers l'Application Web peuvent être vus par les membres d'équipes d'études autorisés, et dans lequel le Module Etudes fournit des instructions spécifiques aux membres d'équipes d'études concernant la manière de conduire des tâches assignées dans les études d'entreprises.

21. Système réseau selon la revendication 20, dans lequel le Module Etudes incorpore une procédure d'évaluation de produit préliminaire accélérée pour les tests et essais cliniques d'un nouveau produit pharmaceutique ou dispositif médical, et dans lequel la procédure d'évaluation de produit préliminaire développe, d'une manière accélérée, une évaluation en langage clair d'une efficacité thérapeutique et d'un potentiel commercial du nouveau produit pharmaceutique ou dispositif médical en fonction d'une analyse critique et d'une déconstruction d'allégations d'un producteur relatives à l'efficacité thérapeutique du nouveau produit pharmaceutique ou dispositif médical.

22. Système réseau selon la revendication 21, dans lequel la procédure d'évaluation de produit préliminaire développe en outre, d'une manière accélérée, des recommandations concernant un investissement dans des évaluations, tests et essais plus poussés du nouveau produit pharmaceutique ou dispositif médical, par comparaison à d'autres investissements dans un ou plusieurs produits pharmaceutiques ou dispositifs médicaux de substitution.
